# EUROPEAN PATENT SPECIFICATION

(11) **EP 4 537 645 B1**
(45) Date of publication and mention of the grant of the patent: **18.11.2026**
(21) Application number: 23819704.0
(22) Date of filing: 29.05.2023
(51) Int. Cl.: G05D 1/243, G05D 1/229, G05D 1/248, G05D 1/693, A01B 69/04, A01B 69/00, G01C 21/20, G05D 105/15, G05D 107/20, G05D 109/10, G05D 111/10

(54) **ROUTE GENERATION SYSTEM AND ROUTE GENERATION METHOD FOR AUTOMATED TRAVEL OF AGRICULTURAL MACHINE**
ROUTENERZEUGUNGSSYSTEM UND ROUTENERZEUGUNGSVERFAHREN ZUR AUTOMATISIERTEN FAHRT EINER LANDWIRTSCHAFTLICHEN MASCHINE
SYSTÈME DE GÉNÉRATION D'ITINÉRAIRE ET PROCÉDÉ DE GÉNÉRATION D'ITINÉRAIRE POUR UN DÉPLACEMENT AUTOMATISÉ D'UNE MACHINE AGRICOLE

(30) Priority: 08.06.2022 JP 2022093143
(43) Date of publication of application: 16.04.2025
(73) Proprietor: Kubota Corporation, Osaka-shi, Osaka 530-0011 (JP)
(72) Inventor: KOMARU, Keigo, Sakai-shi, Osaka 590-0908 (JP); TAMBO, Toru, Sakai-shi, Osaka 590-0908 (JP); NISHIYAMA, Takashi, Sakai-shi, Osaka 590-0908 (JP); WATANABE, Yoshihiro, Sakai-shi, Osaka 590-0908 (JP); ISHIZAKI, Takashi, Sakai-shi, Osaka 590-0908 (JP); SAKUTA, Ken, Sakai-shi, Osaka 590-0908 (JP); SUZUKAWA, Megumi, Sakai-shi, Osaka 590-0908 (JP); MORIMOTO, Wataru, Sakai-shi, Osaka 590-0908 (JP); ISHIHARA, Kenji, Sakai-shi, Osaka 590-0908 (JP)
(74) Representative: Cabinet Beau de Loménie
(86) International application number: PCT/JP2023/019921
(87) International publication number: WO 2023/238724

(56) References cited:
- WO-A1-2023/095856
- JP-A- 2017 055 673
- JP-A- 2021 073 602
- JP-A- 2022 032 803
- JP-A- 2022 032 805
- JP-A- 2023 079 152
- US-A1- 2017 367 252

## Description

### TECHNICAL FIELD

The present disclosure relates to route generation systems and route generation methods for automated travel of agricultural machines.

### BACKGROUND ART

Research and development have been directed to the automation of agricultural machines to be used in agricultural fields. For example, work vehicles, such as tractors, combines, and rice transplanters, which automatically travel within fields by utilizing a positioning system, e.g., a GNSS (Global Navigation Satellite System), are coming into practical use. Research and development are also under way for work vehicles which automatically travel not only within fields, but also outside the fields.

Patent Documents 1 and 2 each disclose an example of system to cause an unmanned work vehicle to automatically travel between two fields separated from each other with a road being sandwiched therebetween.

Document WO 2023/095856 A1 relates to a path planning system for autonomously driving agricultural machinery.

### CITATION LIST

### PATENT LITERATURE

Patent Document 1: Japanese Laid-Open Patent Publications No. 2021-073602
Patent Document 2: Japanese Laid-Open Patent Publications No. 2021-029218

### SUMMARY OF INVENTION

### TECHNICAL PROBLEM

In order to realize an agricultural machine that performs automated travel, it is necessary to generate an automated travel route in advance. The present disclosure provides a technique for properly generating an automated travel route for an agricultural machine.

### SOLUTION TO PROBLEM

A route generation system according to an exemplary embodiment of the present disclosure is a route generation system in accordance with claim 1.

A route generation method according to another embodiment of the present disclosure is a route generation method in accordance with claim 12.

General or specific aspects of the present disclosure may be realized by apparatuses, systems, methods, integrated circuits, computer programs, or computer readable non-transitory storage media, or any combination thereof. The computer readable storage media may include a volatile storage media or a nonvolatile storage media. The apparatuses may be composed of a plurality of apparatuses. If an apparatus is composed of two or more apparatuses, the two or more apparatuses may be provided within a single device or may be provided separately within two or more separate devices.

### ADVANTAGEOUS EFFECTS OF INVENTION

According to an embodiment of the present disclosure, an automated travel route for an agricultural machine can be properly generated.

### BRIEF DESCRIPTION OF DRAWINGS

[FIG. **1]** FIG. **1** is a block diagram showing an example of a route generation system.
[FIG. **2]** FIG. **2** is a block diagram showing an example of a more detailed configuration of the route generation system.
[FIG. **3]** FIG. **3** is a diagram schematically showing a vehicle traveling on a road outside a field while collecting data.
[FIG. **4]** FIG. **4** is a flow chart showing an example of an operation of generating an automated travel route.
[FIG. **5A]** FIG. **5A** is a diagram showing an example of an operation in which a vehicle avoids an oncoming vehicle.
[FIG. **5B]** FIG. **5B** is a diagram showing an example of a travel path from which a path associated with the avoidance action is removed.
[FIG. **5C]** FIG. **5C** is a diagram showing a process of complementing the portion that has been removed from the travel path with a straight complementing route.
[FIG. **6]** FIG. **6** is a diagram showing another example of an operation in which a vehicle avoids an oncoming vehicle.
[FIG. **7A]** FIG. **7A** is a diagram showing an example of a display on a display.
[FIG. **7B]** FIG. **7B** is a diagram showing an example of a display screen when a user touches one of dotted-line encircled portions.
[FIG. **7C]** FIG. **7C** is a diagram showing an example of a display screen when one of the removed sections is complemented.
[FIG. **7D]** FIG. **7D** is a diagram showing an example of a display screen when all the removed sections are complemented to complete an automated travel route.
[FIG. **8]** FIG. **8** is a diagram illustrating an overview of an agricultural management system according to an exemplary embodiment of the present disclosure.
[FIG. **9]** FIG. **9** is a side view schematically showing an example of a work vehicle and an implement connected to the work vehicle.
[FIG. **10]** FIG. **10** is a block diagram showing an example configuration of a work vehicle and an implement.
[FIG. **11]** FIG. **11** is a conceptual diagram showing an example of a work vehicle performing positioning using RTK-GNSS.
[FIG. **12]** FIG. **12** is a diagram showing an example of an operation terminal and operation switches provided inside the cabin.
[FIG. **13]** FIG. **13** is a block diagram illustrating an example of the general hardware configuration of the management device and the terminal device.
[FIG. **14]** FIG. **14** is a diagram schematically showing an example of a work vehicle that automatically travels along a target path in a field.
[FIG. **15]** FIG. **15** is a flow chart showing an example of a steering control operation during automated driving executed by a controller.
[FIG. **16A]** FIG. **16A** is a diagram showing an example of a work vehicle traveling along a target path.
[FIG. **16B]** FIG. **16B** is a diagram showing an example of a work vehicle located at a position shifted to the right from the target path.
[FIG. **16C]** FIG. **16C** is a diagram showing an example of a work vehicle located at a position shifted to the left from the target path.
[FIG. **16D]** FIG. **16D** is a diagram showing an example of a work vehicle facing a direction inclined with respect to the target path.

### DESCRIPTION OF EMBODIMENTS

### (Definition of terms)

In the present disclosure, an "agricultural machine" refers to a machine for agricultural applications. Examples of agricultural machines include tractors, harvesters, rice transplanters, vehicles for crop management, vegetable transplanters, mowers, seeders, spreaders, and mobile robots for agriculture. Not only may a work vehicle such as a tractor function as an "agricultural machine" alone by itself, but also a combination of a work vehicle and an implement that is attached to, or towed by, the work vehicle may function as an "agricultural machine". For the ground surface inside a field, the agricultural machine performs agricultural work such as tilling, seeding, preventive pest control, manure spreading, planting of crop, or harvesting. Such agricultural work or tasks may be referred to as "groundwork", or simply as "work" or "tasks". Travel of a vehicle-type agricultural machine performed while the agricultural machine also performs agricultural work may be referred to as "tasked travel".

"Automated driving" refers to controlling the movement of an agricultural machine by the action of a controller, rather than through manual operations of a driver. An agricultural machine that performs automated driving may be referred to as an "automated driving agricultural machine" or a "robotic agricultural machine". During automated driving, not only the movement of the agricultural machine, but also the operation of agricultural work (e.g., the operation of an implement) may be controlled automatically. In the case where the agricultural machine is a vehicle-type machine, travel of the agricultural machine via automated driving will be referred to as "automated travel". The controller may control at least one of: steering that is required in the movement of the agricultural machine; adjustment of the moving speed; and beginning and ending of a move. In the case of controlling a work vehicle having an implement attached thereto, the controller may control raising or lowering of the implement, beginning and ending of an operation of the implement, and so on. A move based on automated driving may include not only moving of an agricultural machine that goes along a predetermined path toward a destination, but also moving of an agricultural machine that follows a target of tracking. An agricultural machine that performs automated driving may also move partly based on the user's instructions. Moreover, an agricultural machine that performs automated driving may operate not only in an automated driving mode but also in a manual driving mode, where the agricultural machine moves through manual operations of the driver. When performed not manually but through the action of a controller, the steering of an agricultural machine will be referred to as "automatic steering". A portion of, or the entirety of, the controller may reside outside the agricultural machine. Control signals, commands, data, etc., may be communicated between the agricultural machine and a controller existing outside the agricultural machine. An agricultural machine that performs automated driving may move autonomously while sensing the surrounding environment, without any person being involved in the controlling of the movement of the agricultural machine. An agricultural machine that is capable of autonomous movement is able to travel inside the field or outside the field (e.g., on roads) in an unmanned manner. During an autonomous move, operations of detecting and avoiding obstacles may be performed.

An "environment map" is data that representing with a predetermined coordinate system, the position or the region of an object existing in the environment where the agricultural machine moves. The environment map may be referred to simply as a "map" or "map data". The coordinate system defining the environment map may be a world coordinate system such as a geographic coordinate system fixed to the globe, for example. The environment map may include information other than the position (e.g., attribute information or other types of information) for objects that are present in the environment. The environment map encompasses various types of maps, such as a point cloud map or a grid map. Data on a local map or a partial map that is generated or processed in a process of constructing the environment map is also referred to as a "map" or "map data".

"Automated travel route" means data of a route connecting a starting point and a destination point when an agricultural machine travels automatically. An automated travel route may also be called a "global path" or a "target path". An automated travel route can be defined, for example, by the coordinate values of a plurality of points on a map that the agricultural machine should pass through. The points that the agricultural machine should pass through are called "waypoints", and the line segments connecting adjacent waypoints are called "links". The waypoint data may include information on position and speed. In the present specification, the generation of data (e.g., data of a plurality of waypoints) that represents an automated travel route is expressed as "generating an automated travel route".

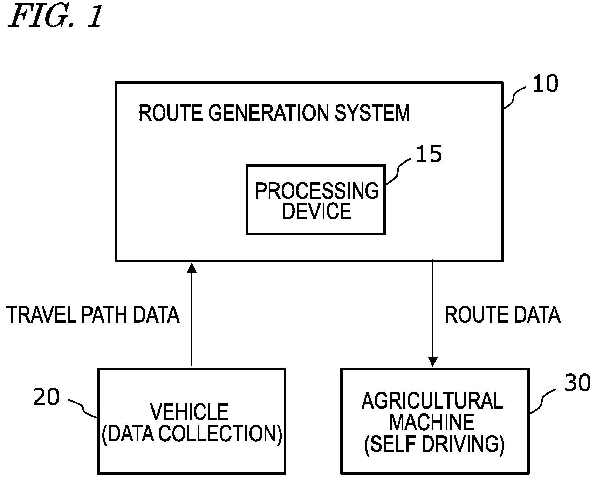

FIG. **1** is a block diagram showing an example of a route generation system for automated travel of agricultural machines. The route generation system **10** shown in FIG. **1** is used in combination with a vehicle **20** that collects data necessary for generating an automated travel route and an agricultural machine **30** that can travel automatically. The route generation system **10** is a computer system that includes a processing device **15.** The processing device **15** generates an automated travel route for the agricultural machine **30** based on data collected by the vehicle **20.** The vehicle **20** is a vehicle that collects data necessary for generating an automated travel route for the agricultural machine **30.** The vehicle **20** can be, for example, a regular automobile, a truck (lorry), a van, or an agricultural work vehicle. The agricultural machine **30** is an automated driving agricultural machine travels automatically according to the automated travel route generated by the processing device **15.** The agricultural machine **30** is an agricultural work vehicle, such as a tractor. The agricultural machine **30** can automatically travel not only inside a field but also on roads outside the field (such as farm roads or public roads).

In the example shown in FIG. **1****,** the vehicle **20** is a different vehicle from the agricultural machine **30,** but the agricultural machine **30** may function also as the vehicle **20.** That is, a single agricultural work vehicle capable of both automated driving and manual driving may be used both as the agricultural machine **30** and as the vehicle **20.** The route generation system **10** may be a system independent of the vehicle **20** and the agricultural machine **30** (e.g., a cloud computing system), or it may be mounted on the vehicle **20** or the agricultural machine **30.** Here, an example will be described in which the vehicle **20** and the agricultural machine **30** are different vehicles, and the route generation system **10** is a system independent of the vehicle **20** and the agricultural machine **30.**

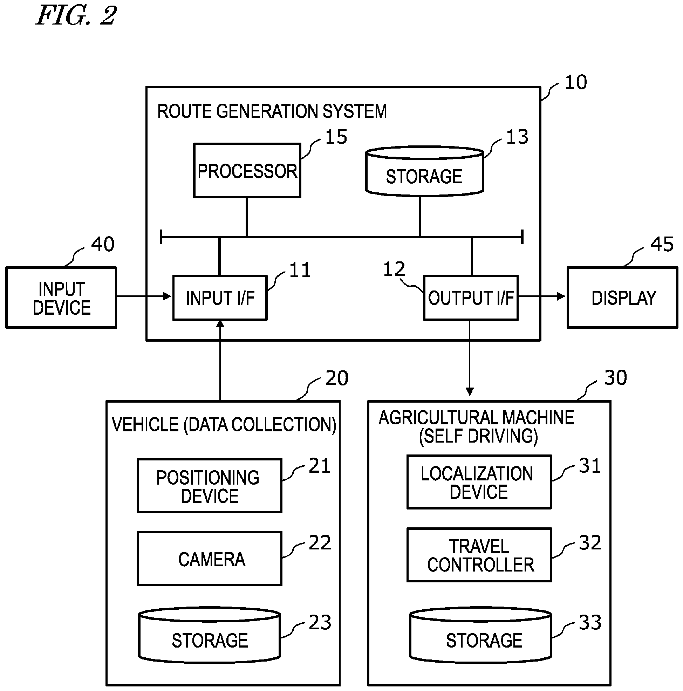

FIG. **2** is a block diagram showing an example of a more detailed configuration of the system shown in FIG. **1****.** In the example shown in FIG. **2****,** the route generation system **10** includes the processing device **15,** an input interface (I/F) **11,** an output interface **12,** and a storage **13.** The vehicle **20** includes a positioning device **21,** a camera **22,** and a storage **23.** The agricultural machine **30** includes a localization device **31,** a travel controller **32,** and a storage **33.** FIG. **2** also shows a display **45** that displays the automated travel route generated by the processing device **15** and an input device **40** that is used by the user to perform an operation of editing the automated travel route.

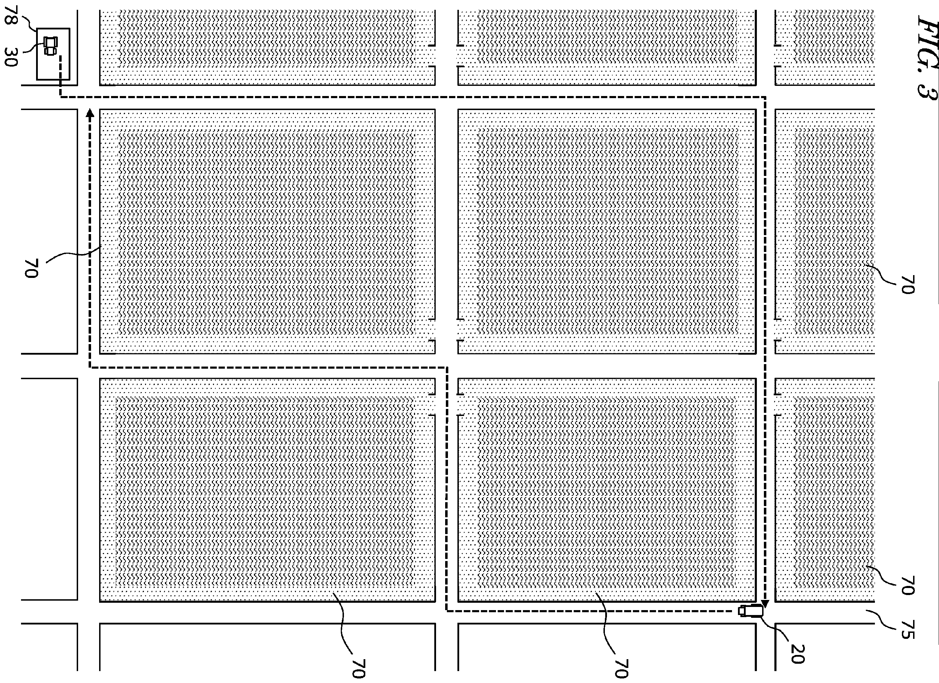

FIG. **3** is a diagram schematically showing the vehicle **20** traveling on a road **75** outside a field **70** (e.g., a farm road) while collecting data. FIG. **3** shows a plurality of fields **70,** roads **75** around the fields **70,** and a storage shed **78** for the agricultural machine **30.** Before starting to operate the agricultural machine **30,** the user drives the vehicle **20** along the route that the agricultural machine **30** is scheduled to travel automatically later. The vehicle **20** travels while recording its own travel path. For example, while traveling, the vehicle **20** records, in the storage **23,** the position data sequentially output from the positioning device **21** such as a GNSS receiver as data that represents the travel path. The position data can include, for example, information on latitude and longitude in a geographic coordinate system. The data representing the travel path can include the position data of the vehicle **20** and corresponding time information. That is, the data representing the travel path can indicate the change over time of the position of the vehicle **20.** The data representing the travel path may include information on the traveling speed of the vehicle **20** at each point in time, in addition to information on the position of the vehicle **20** at each point in time. The information on the position and traveling speed of the vehicle **20** can be recorded at relatively short time intervals (e.g., from several milliseconds to several seconds).

In FIG. **3****,** an example travel path of the vehicle **20** is shown by a dashed arrow. In the example of FIG. **3****,** the vehicle **20** travels from the storage shed **78** along a road **75** around the fields **70** where agricultural work by the agricultural machine **30** is scheduled, and returns to the storage shed **78.** The route that vehicle **20** travels to collect data is determined according to the route that the agricultural machine **30** is scheduled to travel. The vehicle **20** travels, by manual driving, along the route that the agricultural machine **30** is scheduled to travel automatically while recording the travel path. In the present specification, the vehicle **20** traveling by manual driving by a driver will be expressed "travel manually". The vehicle **20** may travel while imaging an area around the vehicle **20** with the camera **22.** In that case, the vehicle **20** travels while recording the video image taken by the camera **22** in the storage **23.**

After completion of the data collection by the vehicle **20,** the data representing the travel path is sent to the processing device **15.** The data representing the travel path may be transmitted to the processing device **15** via a wired or wireless communication line, or may be provided to the processing device **15** via any recording medium. In either way, the processing device **15** acquires the data representing the travel path directly or indirectly from the vehicle **20.** The processing device **15** generates an automated travel route for the agricultural machine **30** based on the acquired data representing the travel path. For example, the processing device **15** can approximate the travel path of the vehicle **20** as a combination of a plurality of line segments on a map prepared in advance, and generate the combination of those line segments as an automated travel route.

In the example shown in FIG. **3****,** there are no obstacles on the road **75** that the vehicle **20** travels, and the vehicle **20** travels in a straight line except when turning right or turning left. In such a case, an automated travel route can be appropriately generated by approximating the travel path of the vehicle **20** with a plurality of line segments. However, when the vehicle **20** is traveling, there may be an oncoming vehicle in front. In that case, if the road **75** is narrow in width, the vehicle **20** will take action to avoid the oncoming vehicle. For example, the vehicle **20** may perform an avoidance action of slowing down and moving to the edge of the road **75,** or moving backwards or temporarily stopping to avoid contact with the oncoming vehicle. In such a case, the travel path associated with the avoidance action is also recorded, so if an automated travel route is simply generated based on the data representing the travel path, an inappropriate automated travel route reflecting the avoidance action will be generated.

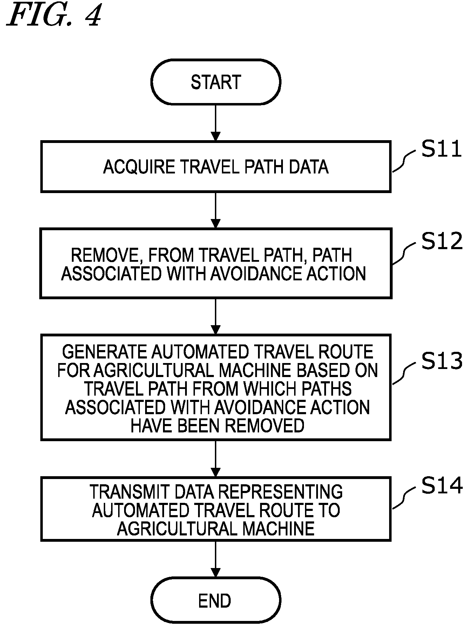

In order to solve the above problem, the processing device **15** of the present embodiment generates an automated travel route after removing paths associated with an avoidance action from the travel path of the vehicle **20.** An example of this process will now be described with reference to FIG. **4****.**

FIG. **4** is a flow chart showing an example of an operation of generating an automated travel route by the processing device **15.** The processing device **15** first acquires the travel path data recorded by the vehicle **20** (step S11). Next, the processing device **15** removes paths associated with an avoidance action taken to avoid an oncoming vehicle from the travel path represented by the travel path data (step S12). An example of a method for identifying paths associated with an avoidance action from the travel path will be described later. The processing device **15** generates an automated travel route for the agricultural machine **30** based on the travel path from which paths associated with an avoidance action have been removed (S13). For example, an automated travel route can be generated by performing a complementing process such as approximating any removed portion with a line segment. Then, the processing device **15** transmits data representing the automated travel route to the agricultural machine **30** (step S14). Note that if the processing device **15** is installed in the agricultural machine **30,** the operation of step S14 may be omitted.

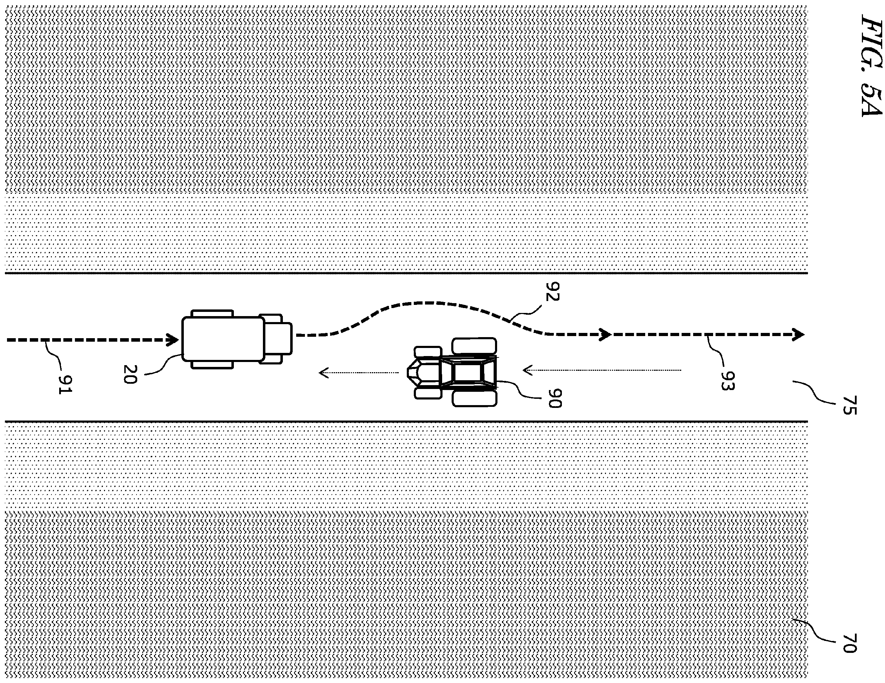

Now, referring to FIGS. **5A** to **5C****,** a specific example of the operation of step S12 and step S13 will be described.

FIG. **5A** shows an example of an operation in which the vehicle **20** avoids an oncoming vehicle **90.** In this example, the driver of the vehicle **20** steers the vehicle **20** so that the vehicle **20** first pulls over to the left edge of the road **75** to avoid contact with the oncoming vehicle **90** coming from the front, and then the vehicle **20** returns near the center of the road **75** after passing by the oncoming vehicle **90.** Therefore, the travel path recorded by the vehicle **20** will be two straight lines **91** and **93** and a non-straight route **92** due to the avoidance action connected to the as straight lines **91** and **93,** as shown by dashed arrows in FIG. **5A****.**

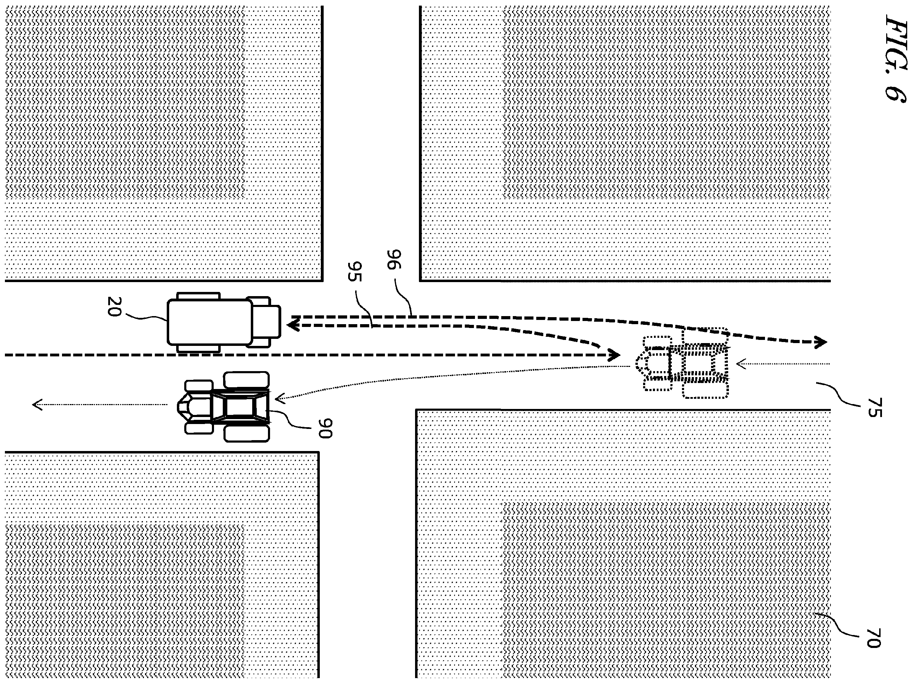

The route associated with the avoidance action (hereinafter referred to also as the "avoidance route") is not limited to the route **92** shown in FIG. **5A****.** For example, as shown in FIG. **6****,** the avoidance route may include a backward route **95** and a forward route **96** thereafter. In the example of FIG. **6****,** the width of road **75** is narrow, and the vehicle **20** and the oncoming vehicle **90** cannot pass each other. In such a case, the vehicle **20** first travels backward to return to a location wide enough to pass each other, temporarily stops, and after the oncoming vehicle **90** has passed, travels forward to return to the original route.

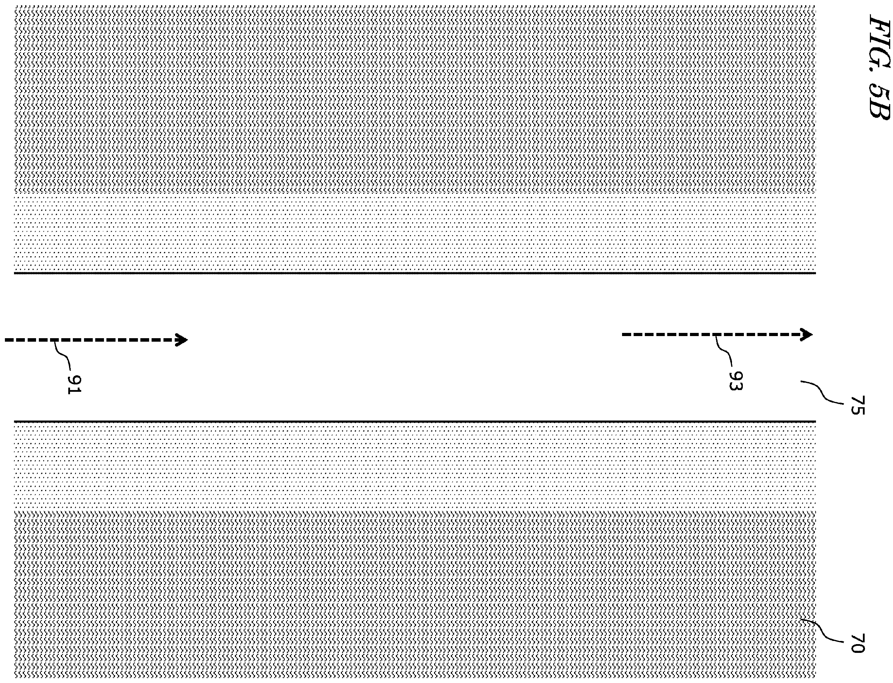

When the processing device **15** acquires data on the travel path of the vehicle **20,** the processing device **15** extracts and removes paths associated with the avoidance action from the travel path represented by the data. FIG. **5B** shows an example of a travel path from which the path associated with the avoidance action has been removed.

The processing device **15** may extract paths associated with the avoidance action based on the data of the video image taken by the camera **22** while the vehicle **20** is traveling. In that case, in step S11 shown in FIG. **4****,** the processing device **15** acquires the data of the video image in addition to the data of the travel path. The processing device **15** detects an avoidance action based on the video image, and determines and removes paths associated with the avoidance action from the travel path.

The processing device **15** may perform an image recognition process based on the video image, and determine paths associated with the avoidance action based on the result of identifying the oncoming vehicle **90** approaching the vehicle **20** from the video image. For example, the processing device **15** may remove, as paths associated with the avoidance action, paths corresponding to at least a portion of the period from when the oncoming vehicle **90** is identified in the video image to when the oncoming vehicle **90** is no longer identified, from the travel path. Alternatively, the processing device **15** may remove, as paths associated with the avoidance action, paths corresponding to a predetermined length of time (e.g., 10 seconds, 20 seconds, or 30 seconds, etc.) in the travel path, which includes a period from when the oncoming vehicle **90** is identified to have approached the vehicle **20** to a predetermined distance (e.g., 5 m, 10 m, or 20 m, etc.) in the video image to when the oncoming vehicle **90** is no longer identified.

The processing device **15** may detect an avoidance action based on the change over time of the position of the vehicle **20** indicated by the travel path. For example, the processing device **15** may detect, as an avoidance action, at least one of traveling backward, changing the direction, accelerating, and decelerating done by the vehicle **20** to avoid the oncoming vehicle **90.** As an example, the processing device **15** may extract, as a path associated with an avoidance action, a portion of the travel path that traces a non-straight path, even though it is a path for a straight section of the road **75.** Extracting paths associated with an avoidance action may be done using the record of steering and/or accelerating/decelerating operation of the vehicle **20.** For example, the processing device **15** may extract, as a path associated with an avoidance action, a portion of the travel path where a significant change of direction is made at a position other than in an intersection on the road **75.** The processing device **15** may extract, as a path associated with an avoidance action, a portion of the travel path where the vehicle **20** decelerates or stops, or moves backward and then forward again while traveling along the road **75.** Machine learning algorithms such as deep learning may be used to detect an avoidance action. The processing device **15** may extract a path associated with an avoidance action from the travel path based on data of the travel path acquired from the vehicle **20** and a pre-trained learned model.

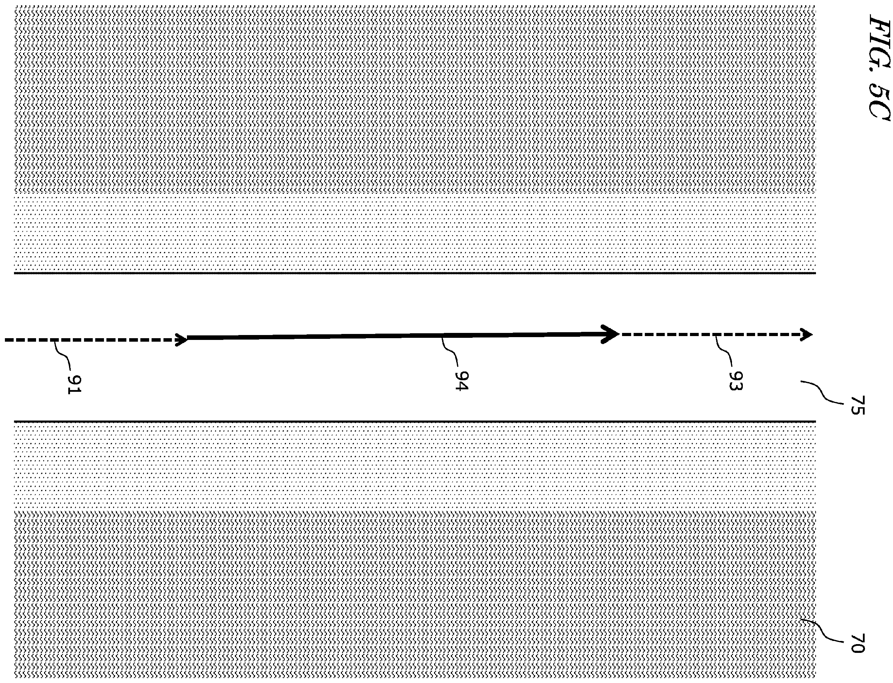

The processing device **15** generates an automated travel route by removing paths associated with an avoidance action and then performing the process of complementing the removed portions. For example, as shown in FIG. **5C****,** the processing device **15** may generate an automated travel route by complementing a portion removed from the travel path with a straight complementing route **94.** Such a complementing process may be performed automatically by the processing device **15** or in response to an operation from the user. For example, the processing device **15** may display, on the display **45,** the travel path with a path associated with an avoidance action removed, and may complement the portion that has been removed from the travel path in response to an operation by the user to confirm a complementing route using the input device **40.**

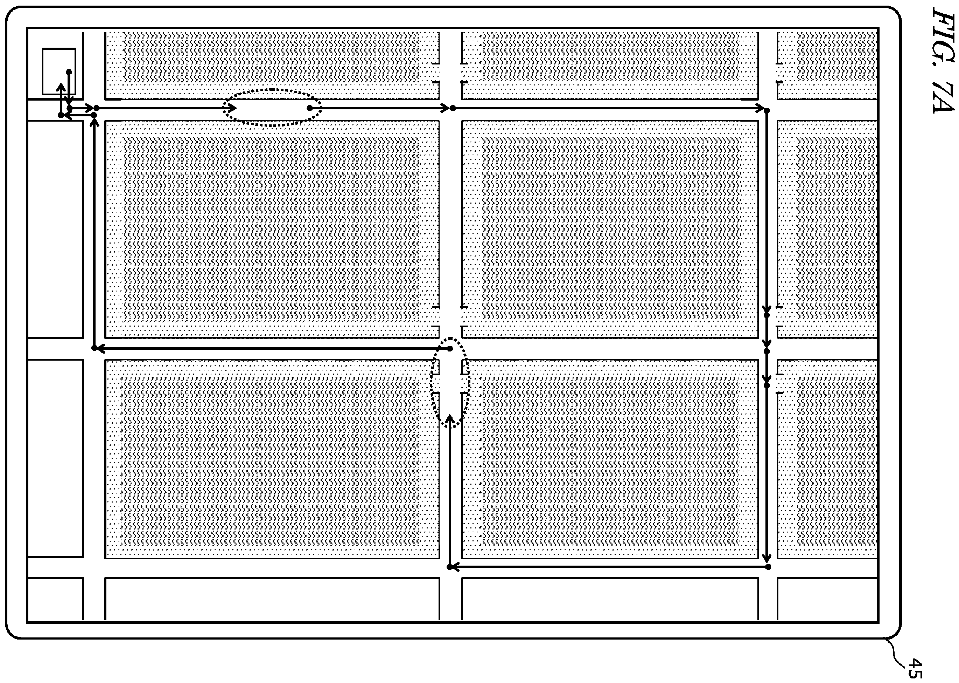

FIG. **7A** is a diagram showing an example of a display on the display **45.** The display **45** in this example is a computer with a built-in display, such as a tablet computer or a smartphone. The display **45** shown in the figure includes a touch screen and functions also as the input device **40.** The display **45** displays an environment map around the fields **70.** A route obtained by removing avoidance routes from the travel path of the vehicle **20** is shown on the map. In FIG. **7A****,** portions corresponding to the removed avoidance routes are encircled by dotted lines. The user can perform an operation of complementing the route by, for example, touching a dotted-line encircled portion.

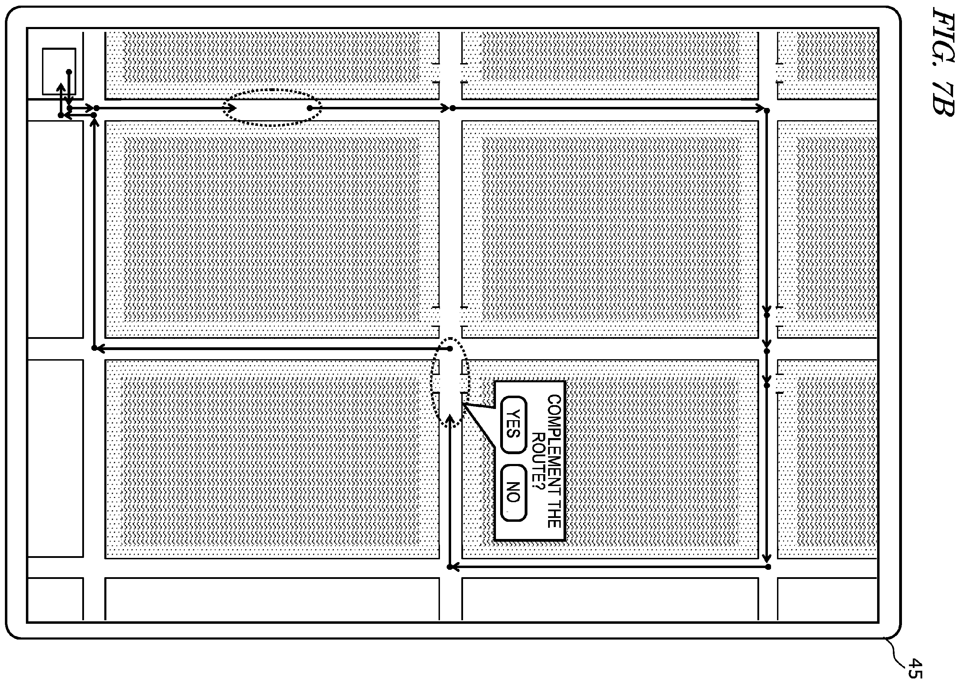

FIG. **7B** shows an example of the display screen when the user touches one of the dotted-line encircled portions. In this example, a pop-up window appears asking "Complement the route?", and the user can select "Yes" or "No". If the user selects "Yes", the processing device **15** generates a complementing route that complements the removed portion. The processing device **15,** for example, complements the removed portion with a straight complementing route. Alternatively, the user may be able to specify the complementing route.

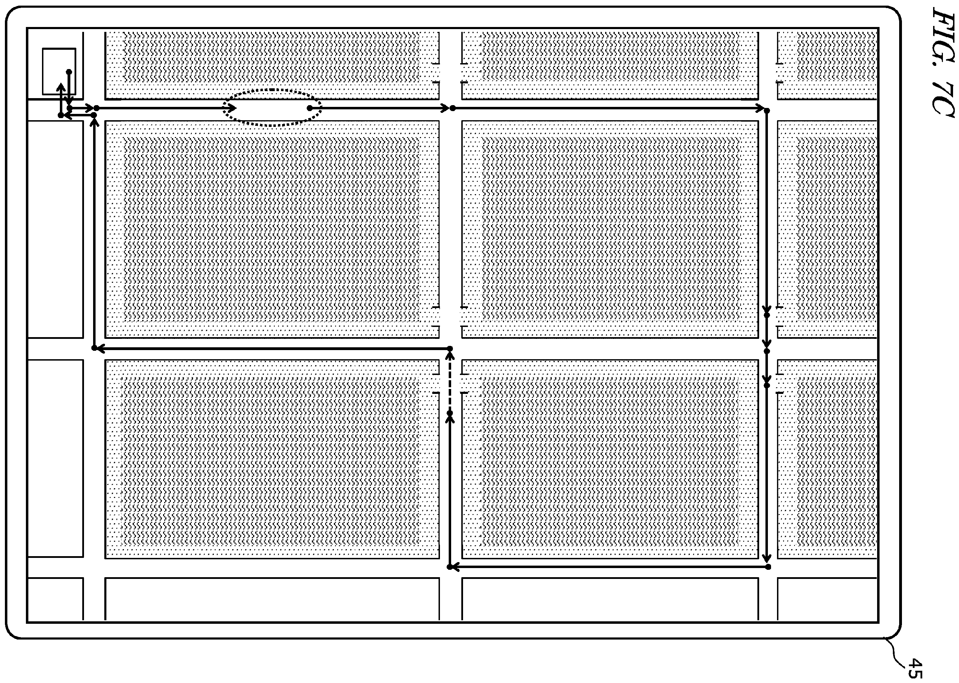

FIG. **7C** illustrates a state in which one of the removed portions has been complemented. The complemented portion is indicated by a dashed arrow. The user can similarly complement the other removed portion.

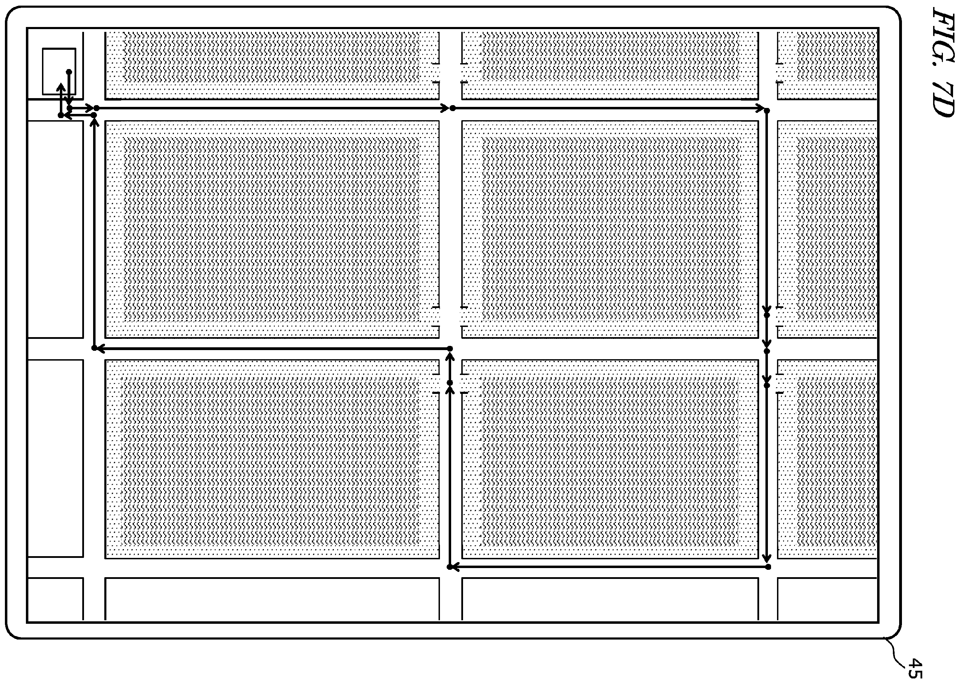

FIG. **7D** illustrates a state in which all removed portions have been complemented to complete an automated travel route. The automated travel route can be defined by a plurality of waypoints, for example. Each waypoint can include information on position and speed, for example. In FIG. **7D****,** waypoints are represented by dots, and links between waypoints are represented by arrows. In this example, waypoints are set at locations where the agricultural machine **30** can change direction (such as at intersections, near the entrances and exits of fields, and near the entrance and exit of the storage shed). The method of setting waypoints is not limited to the illustrated example, and the length of the links between waypoints can be set arbitrarily.

The above operation prevents the avoidance action performed to avoid the oncoming vehicle **90** from being reflected in the automated travel route. Thus, it is possible to generate a more appropriate automated travel route for the agricultural machine **30.**

The data representing the generated automated travel route is sent to the agricultural machine **30** and recorded in the storage **33.** A travel controller **32** of the agricultural machine **30** controls the traveling speed and steering of the agricultural machine **30** so that the agricultural machine **30** travels along the automated travel route. For example, if the automated travel route is defined by a plurality of waypoints, each of which includes position and speed information, the travel controller **32** controls the traveling speed and steering so that the agricultural machine **30** passes through each waypoint at the specified speed. The travel controller **32** can estimate the extent to which the agricultural machine **30** deviates from the automated travel route based on the position and orientation of the agricultural machine **30** estimated by the localization device **31.** The localization device **31** is a device that performs localization using sensors such as GNSS, IMU (Inertial Measurement Unit), LiDAR (Light Detection and Ranging), and/or cameras (including image sensors). The travel controller **32** can achieve traveling along the automated travel route by performing steering control to reduce the deviation of the position and/or orientation of the agricultural machine **30** from the automated travel route.

In the present embodiment, the processing device **15** executes the above-mentioned process when generating a route for the agricultural machine **30** to travel automatically outside the field. The processing device **15** may also execute a similar process when generating a route for the agricultural machine **30** to travel automatically inside the field. Even inside the field, other agricultural work vehicles may be present as oncoming vehicles, and the route generation method of the present embodiment is effective.

Next, an embodiment in which the technology of the present disclosure is applied to a work vehicle such as a tractor, which is an example of the agricultural machine will be described. The technology of the present disclosure can be applied not only to work vehicles such as tractors, but also to other types of agricultural machines.

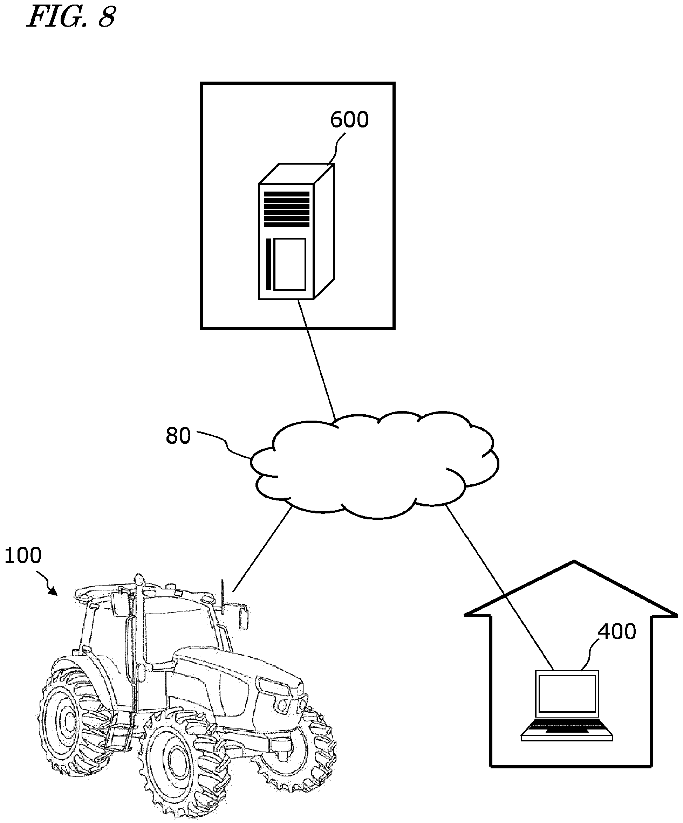

FIG. **8** is a diagram illustrating an overview of an agricultural management system in an exemplary embodiment of the present disclosure. The system shown in FIG. **8** includes a work vehicle **100,** a terminal device **400,** and a management device **600.** The work vehicle **100** is an agricultural machine capable of automated travel. The terminal device **400** is a computer used by a user who monitors the work vehicle **100** remotely. The management device **600** is a computer managed by an operator who operates the system. The work vehicle **100,** the terminal device **400,** and the management device **600** can communicate with each other via a network **80.** While FIG. **8** illustrates one work vehicle **100,** the system may include a plurality of work vehicles or other agricultural machines. In the present embodiment, the work vehicle **100** serves the function as both the vehicle **20** and the agricultural machine **30** shown in FIG. **1****.** The management device **600** includes the function of the processing device **15** shown in FIG. **1****.**

The work vehicle **100** according to the present embodiment is a tractor. The work vehicle **100** can have an implement attached to its rear and/or its front. While performing agricultural work in accordance with a particular type of implement, the work vehicle **100** is able to travel inside a field. The work vehicle **100** may travel inside the field or outside the field with no implement being attached thereto.

The work vehicle **100** has an automated driving function. In other words, the work vehicle **100** can travel by the action of a controller, rather than manually. The controller according to the present embodiment is provided inside the work vehicle **100,** and is able to control both the speed and steering of the work vehicle **100.** The work vehicle **100** can perform automated travel outside the field (e.g., on roads) as well as inside the field.

The work vehicle **100** includes a device usable for positioning or localization, such as a GNSS receiver or an LiDAR sensor. Based on the position of the work vehicle **100** and information on a target path, the controller of the work vehicle **100** causes the work vehicle **100** to automatically travel. In addition to controlling the travel of the work vehicle **100,** the controller also controls the operation of the implement. As a result, while automatically traveling inside the field, the work vehicle **100** is able to perform agricultural work by using the implement. In addition, the work vehicle **100** is able to automatically travel along the target path on a road outside the field (e.g., an agricultural road or a general road). In the case of performing automated travel on a road outside the field, the work vehicle **100** travels while generating, along the target path, a local path along which the work vehicle **100** can avoid an obstacle, based on data output from a sensing device such as a camera or a LiDAR sensor. Inside the field, the work vehicle **100** may travel while generating a local path in substantially the same manner as described above, or may perform an operation of traveling along the target path without generating a local path and halting when an obstacle is detected.

The management device **600** is a computer to manage the agricultural work performed by the work vehicle **100.** The management device **600** may be, for example, a server computer that performs centralized management on information regarding the field on the cloud and supports agriculture by use of the data on the cloud. The management device **600** includes functions equivalent to those of the processing device **15** shown in FIG. **1****.** That is, the management device **600** generates an automated travel route (i.e., a target path) for the work vehicle **100.** The management device **600** acquires data showing the travel path taken by the work vehicle **100** when driven manually, and generates an automated travel route for the work vehicle **100** based on this data. More specifically, before the work vehicle **100** starts automated travel, the work vehicle **100** manually travels the route the work vehicle **100** is scheduled to travel automatically while recording its path. The work vehicle **100** records the travel path by sequentially recording its own position using a positioning device such as a GNSS unit. After the traveling for data recording is completed, the management device **600** acquires data representing the travel path from the work vehicle **100.** The travel path may include a path associated with an avoidance action taken to avoid an oncoming vehicle on a road. The management device **600** removes the path associated with an avoidance action taken to avoid an oncoming vehicle from the travel path represented by the data acquired by the method described above, and generates an automated travel route for the work vehicle **100** based on the travel path from which the path has been removed. By such a process, it is possible to generate an appropriate automated travel route without reflecting paths associated with avoidance actions.

The management device **600** may also create a work plan for the work vehicle **100** and, according to the work plan, give instructions to the work vehicle **100** to start and end automated travel. The management device **600** may also generate an environment map based on data collected by the work vehicle **100** or other vehicles using a sensing device such as a LiDAR sensor.

The management device **600** transmits the data, such as the generated automated travel route, work plan, and environment map, to the work vehicle **100.** The work vehicle **100** automatically performs traveling and agricultural work based on those data.

Note that the automated travel route may be generated not only by the management device **600,** but also by other devices. For example, the controller of the work vehicle **100** may generate the automated travel route. In that case, the controller of the work vehicle **100** functions as a processing device configured to generate the automated travel route.

The terminal device **400** is a computer that is used by a user who is at a remote place from the work vehicle **100.** The terminal device **400** shown in FIG. **8** is a laptop computer, but the terminal device **400** is not limited to this. The terminal device **400** may be a stationary computer such as a desktop PC (personal computer), or a mobile terminal such as a smartphone or a tablet computer. The terminal device **400** may be used to perform remote monitoring of the work vehicle **100** or remote-manipulate the work vehicle **100.** For example, the terminal device **400** can display, on a display screen thereof, a video captured by one or more cameras (imagers) included in the work vehicle **100.** The user can watch the video to check the state of the surroundings of the work vehicle **100** and instruct the work vehicle **100** to halt or begin traveling. The terminal device **400** may also include the functions of the input device **40** and display **45** shown in FIG. **2****.** That is, the terminal device **400** may be used to edit the automated travel route generated by the management device **600.**

Hereinafter, a configuration and an operation of the system according to the present embodiment will be described in more detail.

### [1. Configuration]

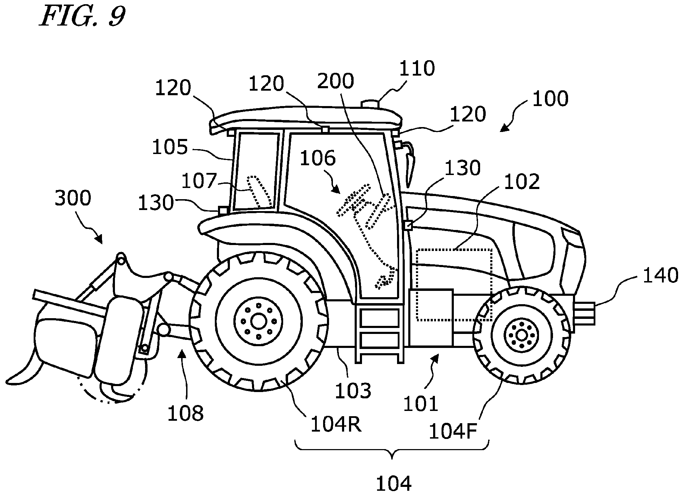

FIG. **9** is a side view schematically showing an example of the work vehicle **100** and an example of implement **300** linked to the work vehicle **100.** The work vehicle **100** according to the present embodiment can operate both in a manual driving mode and automated driving mode. In the automated driving mode, the work vehicle **100** is able to perform unmanned travel. The work vehicle **100** can perform automated driving both inside a field and outside the field.

As shown in FIG. **9****,** the work vehicle **100** includes a vehicle body **101,** a prime mover (engine) **102,** and a transmission **103.** On the vehicle body **101,** wheels **104** with tires and a cabin **105** are provided. The wheels **104** include a pair of front wheels **104F** and a pair of rear wheels **104R.** Inside the cabin **105,** a driver's seat **107,** a steering device **106,** an operation terminal **200,** and switches for manipulation are provided. One or both of the front wheel **104F** and the rear wheel **104R** may be replaced with a plurality of wheels to which a continuous track is attached (crawler) instead of a tire-mounted wheel.

The work vehicle **100** includes a plurality of sensing devices sensing the surroundings of the work vehicle **100.** In the example shown in FIG. **9****,** the sensing devices include a plurality of cameras **120,** a LiDAR sensor **140,** and a plurality of obstacle sensors **130.**

The cameras **120** may be provided at the front/rear/right/left of the work vehicle **100,** for example. The cameras **120** image the surrounding environment of the work vehicle **100** and generate image data. The images acquired by the cameras **120** may be transmitted to the terminal device **400,** which is responsible for remote monitoring. The images may be used to monitor the work vehicle **100** during unmanned driving. The cameras **120** may also be used to generate images to allow the work vehicle **100,** traveling on a road outside the field (an agricultural road or a general road), to recognize objects, obstacles, white lines, road signs, traffic signs or the like in the surroundings of the work vehicle **100.** For example, the cameras **120** may also be used to detect an oncoming vehicle when the work vehicle **100** is traveling by manual driving while recording the travel path.

The LiDAR sensor **140** in the example of FIG. **9** is disposed on a bottom portion of a front surface of the vehicle body **101.** The LiDAR sensor **140** may be disposed at any other position. While the work vehicle **100** is traveling mainly outside the field, the LiDAR sensor **140** repeatedly outputs sensor data representing the distance and the direction between an object existing in the surrounding environment thereof and each of measurement points, or a two-dimensional or three-dimensional coordinate values of each of the measurement points. The sensor data output from the LiDAR sensor **140** is processed by the controller of the work vehicle **100.** The controller can perform localization of the work vehicle **100** by matching the sensor data against the environment map. The controller can further detect an object such as an obstacle existing in the surroundings of the work vehicle **100** based on the sensor data, and generate, along the target path, a local path along which the work vehicle **100** needs to actually proceed. The controller can utilize an algorithm such as, for example, SLAM (Simultaneous Localization and Mapping) to generate or edit an environment map. The work vehicle **100** may include a plurality of LiDAR sensors disposed at different positions with different orientations.

The plurality of obstacle sensors **130** shown in FIG. **9** are provided at the front and the rear of the cabin **105.** The obstacle sensors **130** may be disposed at other positions. For example, one or more obstacle sensors **130** may be disposed at any position at the sides, the front or the rear of the vehicle body **101.** The obstacle sensors **130** may include, for example, a laser scanner or an ultrasonic sonar. The obstacle sensors **130** may be used to detect obstacles in the surroundings of the work vehicle **100** during automated travel to cause the work vehicle **100** to halt or detour around the obstacles. The LiDAR sensor **140** may be used as one of the obstacle sensors **130.**

The work vehicle **100** further includes a GNSS unit **110.** The GNSS unit **110** includes a GNSS receiver. The GNSS receiver may include an antenna to receive a signal(s) from a GNSS satellite(s) and a processor to calculate the position of the work vehicle **100** based on the signal(s) received by the antenna. The GNSS unit **110** receives satellite signals transmitted from the plurality of GNSS satellites, and performs positioning based on the satellite signals. GNSS is the general term for satellite positioning systems such as GPS (Global Positioning System), QZSS (Quasi-Zenith Satellite System; e.g., MICHIBIKI), GLONASS, Galileo, and BeiDou. Although the GNSS unit **110** according to the present embodiment is disposed above the cabin **105,** it may be disposed at any other position.

The GNSS unit **110** may include an inertial measurement unit (IMU). Signals from the IMU can be used to complement position data. The IMU can measure a tilt or a small motion of the work vehicle **100.** The data acquired by the IMU can be used to complement the position data based on the satellite signals, so as to improve the performance of positioning.

The controller of the work vehicle **100** may utilize, for positioning, the sensing data acquired by the sensing devices such as the cameras **120** or the LIDAR sensor **140,** in addition to the positioning results provided by the GNSS unit **110.** In the case where objects serving as characteristic points exist in the environment that is traveled by the work vehicle **100,** as in the case of an agricultural road, a forest road, a general road or an orchard, the position and the orientation of the work vehicle **100** can be estimated with a high accuracy based on data that is acquired by the cameras **120** or the LiDAR sensor **140** and on an environment map that is previously stored in the storage. By correcting or complementing position data based on the satellite signals using the data acquired by the cameras **120** or the LiDAR sensor **140,** it becomes possible to identify the position of the work vehicle 100 with a higher accuracy.

The prime mover **102** may be a diesel engine, for example. Instead of a diesel engine, an electric motor may be used. The transmission **103** can change the propulsion and the moving speed of the work vehicle **100** through a speed changing mechanism. The transmission **103** can also switch between forward travel and backward travel of the work vehicle **100.**

The steering device **106** includes a steering wheel, a steering shaft connected to the steering wheel, and a power steering device to assist in the steering by the steering wheel. The front wheels **104F** are the wheels responsible for steering, such that changing their angle of turn (also referred to as "steering angle") can cause a change in the traveling direction of the work vehicle **100.** The steering angle of the front wheels **104F** can be changed by manipulating the steering wheel. The power steering device includes a hydraulic device or an electric motor to supply an assisting force to change the steering angle of the front wheels **104F.** When automatic steering is performed, under the control of the controller disposed in the work vehicle **100,** the steering angle may be automatically adjusted by the power of the hydraulic device or the electric motor.

A linkage device **108** is provided at the rear of the vehicle body **101.** The linkage device **108** includes, e.g., a three-point linkage (also referred to as a "three-point link" or a "three-point hitch"), a PTO (Power Take Off) shaft, a universal joint, and a communication cable. The linkage device **108** allows the implement **300** to be attached to, or detached from, the work vehicle **100.** The linkage device **108** is able to raise or lower the three-point link with a hydraulic device, for example, thus changing the position and/or attitude of the implement **300.** Moreover, motive power can be sent from the work vehicle **100** to the implement **300** via the universal joint. While towing the implement **300,** the work vehicle **100** allows the implement **300** to perform a predetermined task. The linkage device may be provided frontward of the vehicle body **101.** In that case, the implement can be connected frontward of the work vehicle **100.**

Although the implement **300** shown in FIG. **9** is a rotary tiller, the implement **300** is not limited to a rotary tiller. For example, any arbitrary implement such as a seed-er, a spreader, a transplanter, a mower, a rake implement, a baler, a harvester, a sprayer, or a harrow, can be connected to the work vehicle **100** for use.

The work vehicle **100** shown in FIG. **9** can be driven by human driving. Alternatively, it may only support unmanned driving. In that case, component elements which are only required for human driving, e.g., the cabin **105,** the steering device **106,** and the driver's seat **107** do not need to be provided in the work vehicle **100.** An unmanned work vehicle **100** can travel via autonomous driving, or by remote manipulation by a user. When a work vehicle **100** that does not have the human driving function is used, the data for the travel path for route generation is acquired by a human-driven vehicle other than the work vehicle **100.**

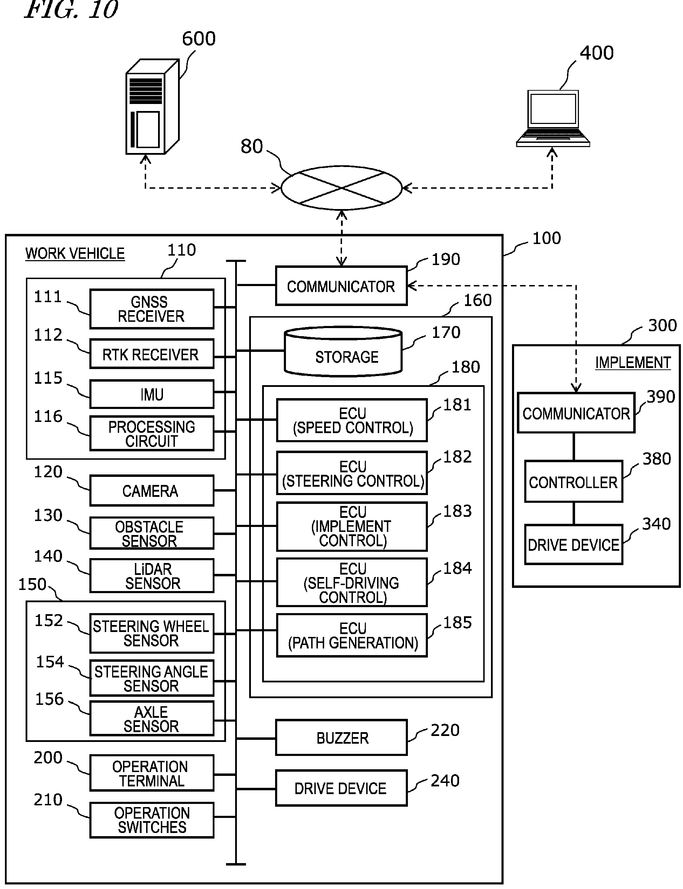

FIG. **10** is a block diagram showing an example configuration of the work vehicle **100** and the implement **300.** The work vehicle **100** and the implement **300** can communicate with each other via a communication cable that is included in the linkage device **108.** The work vehicle **100** is able to communicate with the terminal device **400** and the management device **600** via the network **80.**

In addition to the GNSS unit **110,** the cameras **120,** the obstacle sensors **130,** the LiDAR sensor **140** and the operation terminal **200,** the work vehicle **100** in the example of FIG. **10** includes sensors **150** to detect the operating status of the work vehicle **100,** a control system **160,** a communicator **190,** operation switches **210,** a buzzer **220,** and a drive device **240.** These component elements are communicably connected to each other via a bus. The GNSS unit **110** includes a GNSS receiver **111,** an RTK receiver **112,** an inertial measurement unit (IMU) **115,** and a processing circuit **116.** The sensors **150** include a steering wheel sensor **152,** an steering angle sensor **154,** and a wheel axis sensor **156.** The control system **160** includes a storage **170** and a controller **180.** The controller **180** includes a plurality of electronic control units (ECU) **181** to **185.** The implement **300** includes a drive device **340,** a controller **380,** and a communicator **390.** Note that FIG. **10** shows component elements which are relatively closely related to the operations of automated driving by the work vehicle **100,** while other components are omitted from illustration.

The GNSS receiver **111** in the GNSS unit **110** receives satellite signals transmitted from the plurality of GNSS satellites and generates GNSS data based on the satellite signals. The GNSS data is generated in a predetermined format such as, for example, the NMEA-0183 format. The GNSS data may include, for example, the identification number, the angle of elevation, the angle of direction, and a value representing the reception strength of each of the satellites from which the satellite signals are received.

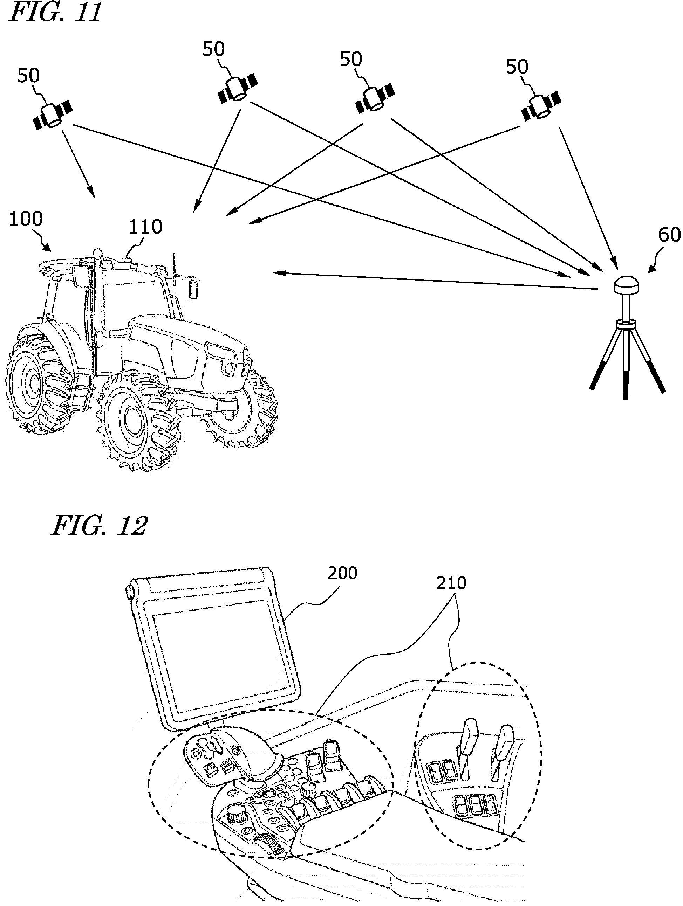

The GNSS unit **110** shown in FIG. **10** performs positioning of the work vehicle **100** by utilizing an RTK (Real Time Kinematic) -GNSS. FIG. **11** is a conceptual diagram showing an example of the work vehicle **100** performing positioning based on the RTK-GNSS. In the positioning based on the RTK-GNSS, not only satellite signals transmitted from a plurality of GNSS satellites **50,** but also a correction signal that is transmitted from a reference station **60** is used. The reference station **60** may be disposed near the field where the work vehicle **100** performs tasked travel (e.g., at a position within 10 km of the work vehicle **100).** The reference station **60** generates a correction signal of, for example, an RTCM format based on the satellite signals received from the plurality of GNSS satellites **50,** and transmits the correction signal to the GNSS unit **110.** The RTK receiver **112,** which includes an antenna and a modem, receives the correction signal transmitted from the reference station **60.** Based on the correction signal, the processing circuit **116** of the GNSS unit **110** corrects the results of the positioning performed by use of the GNSS receiver **111.** Use of the RTK-GNSS enables positioning with an accuracy on the order of several centimeters of errors, for example. Positional information including latitude, longitude, and altitude information is acquired through the highly accurate positioning by the RTK-GNSS. The GNSS unit **110** calculates the position of the work vehicle **100** as frequently as, for example, one to ten times per second.

Note that the positioning method is not limited to being performed by use of an RTK-GNSS, and any arbitrary positioning method (e.g., an interferometric positioning method or a relative positioning method) that provides positional information with the necessary accuracy can be used. For example, positioning may be performed by utilizing a VRS (Virtual Reference Station) or a DGPS (Differential Global Positioning System). In the case where positional information with the necessary accuracy can be obtained without the use of the correction signal transmitted from the reference station **60,** positional information may be generated without using the correction signal. In that case, the GNSS unit **110** does not need to include the RTK receiver **112.**

Even in the case where the RTK-GNSS is used, at a site where the correction signal from the reference station **60** cannot be acquired (e.g., on a road far from the field), the position of the work vehicle **100** is estimated by another method with no use of the signal from the RTK receiver **112.** For example, the position of the work vehicle **100** may be estimated by matching the data output from the LiDAR sensor **140** and/or the cameras **120** against a highly accurate environment map.

The GNSS unit **110** according to the present embodiment further includes the IMU **115.** The IMU **115** may include a 3-axis accelerometer and a 3-axis gyroscope. The IMU **115** may include a direction sensor such as a 3-axis geomagnetic sensor. The IMU **115** functions as a motion sensor which can output signals representing parameters such as acceleration, velocity, displacement, and attitude of the work vehicle **100.** Based not only on the satellite signals and the correction signal but also on a signal that is output from the IMU **115,** the processing circuit **116** can estimate the position and orientation of the work vehicle **100** with a higher accuracy. The signal that is output from the IMU **115** may be used for the correction or complementation of the position that is calculated based on the satellite signals and the correction signal. The IMU **115** outputs a signal more frequently than the GNSS receiver **111.** Utilizing this signal that is output highly frequently, the processing circuit **116** allows the position and orientation of the work vehicle **100** to be measured more frequently (e.g., about 10 Hz or above). Instead of the IMU **115,** a 3-axis accelerometer and a 3-axis gyroscope may be separately provided. The IMU **115** may be provided as a separate device from the GNSS unit **110.**

The cameras **120** are imagers that image the surrounding environment of the work vehicle **100.** Each of the cameras **120** includes an image sensor such as a CCD (Charge Coupled Device) or a CMOS (Complementary Metal Oxide Semiconductor), for example. In addition, each camera **120** may include an optical system including one or more lenses and a signal processing circuit. During travel of the work vehicle **100,** the cameras **120** image the surrounding environment of the work vehicle **100,** and generate image data (e.g., motion picture data). The cameras **120** are able to capture motion pictures at a frame rate of 3 frames/second (fps: frames per second) or greater, for example. The images generated by the cameras **120** may be used by a person monitoring remotely to check the surrounding environment of the work vehicle **100** with the terminal device **400,** for example. The images generated by the cameras **120** may also be used for the purpose of positioning and/or detection of obstacles. For example, the images generated by the camera **120** when the work vehicle **100** is traveling to collect data of the travel path described above may be used in the process of detecting the action of recognizing oncoming vehicles and avoiding oncoming vehicles. As shown in FIG. **9****,** the plurality of cameras **120** may be provided at different positions on the work vehicle **100,** or a single camera **120** may be provided. A visible light camera(s) to generate visible light images and an infrared camera(s) to generate infrared images may be separately provided. Both of a visible light camera(s) and an infrared camera(s) may be provided as cameras for generating images for monitoring purposes. The infrared camera(s) may also be used for detection of obstacles at nighttime.

The obstacle sensors **130** detect objects existing in the surroundings of the work vehicle **100.** Each of the obstacle sensors **130** may include a laser scanner or an ultrasonic sonar, for example. When an object exists at a position within a predetermined distance from one of the obstacle sensors **130,** the obstacle sensor **130** outputs a signal indicating the presence of the obstacle. The plurality of obstacle sensors **130** may be provided at different positions on the work vehicle **100.** For example, a plurality of laser scanners and a plurality of ultrasonic sonars may be disposed at different positions on the work vehicle **100.** Providing such a great number of obstacle sensors **130** can reduce blind spots in monitoring obstacles in the surroundings of the work vehicle **100.**

The steering wheel sensor **152** measures the angle of rotation of the steering wheel of the work vehicle **100.** The steering angle sensor **154** measures the angle of turn of the front wheels **104F,** which are the wheels responsible for steering. Measurement values by the steering wheel sensor **152** and the steering angle sensor **154** are used for steering control by the controller **180.**

The wheel axis sensor **156** measures the rotational speed, i.e., the number of revolutions per unit time, of a wheel axis that is connected to the wheels **104.** The wheel axis sensor **156** may be a sensor including a magnetoresistive element (MR), a Hall generator, or an electromagnetic pickup, for example. The wheel axis sensor **156** outputs a numerical value indicating the number of revolutions per minute (unit: rpm) of the wheel axis, for example. The wheel axis sensor **156** is used to measure the speed of the work vehicle **100.**

The drive device **240** includes various types of devices required to cause the work vehicle **100** to travel and to drive the implement **300,** for example, the prime mover **102,** the transmission **103,** the steering device **106,** the linkage device **108** and the like described above. The prime mover **102** may include an internal combustion engine such as, for example, a diesel engine. The drive device **240** may include an electric motor for traction instead of, or in addition to, the internal combustion engine.

The buzzer **220** is an audio output device to present an alarm sound to alert the user of an abnormality. For example, the buzzer **220** may present an alarm sound when an obstacle is detected during automated driving. The buzzer **220** is controlled by the controller **180.**

The storage **170** includes one or more storage mediums such as a flash memory or a magnetic disc. The storage **170** stores various data that is generated by the GNSS unit **110,** the cameras **120,** the obstacle sensors **130,** the LiDAR sensor **140,** the sensors **150,** and the controller **180.** The data that is stored by the storage **170** may include map data on the environment where the work vehicle **100** travels (environment map) and data on an automated travel path (target path) for automated driving. The environment map includes information on a plurality of fields where the work vehicle **100** performs agricultural work and roads around the fields. The environment map and the target path may be generated by a processor in the management device **600.** The controller **180** according to the present embodiment has a function of generating or editing an environment map and a target path. The controller **180** can edit the environment map and the target path, acquired from the management device **160,** in accordance with the environment where the work vehicle **100** travels. The storage **170** also stores a computer program(s) to cause each of the ECUs in the controller **180** to perform various operations described below. Such a computer program(s) may be provided to the work vehicle **100** via a storage medium (e.g., a semiconductor memory, an optical disc, etc.) or through telecommunication lines (e.g., the Internet). Such a computer program(s) may be marketed as commercial software.

The controller **180** includes the plurality of ECUs. The plurality of ECUs include, for example, the ECU **181** for speed control, the ECU **182** for steering control, the ECU **183** for implement control, the ECU **184** for automated driving control, and the ECU **185** for path generation.

The ECU **181** controls the prime mover **102,** the transmission **103** and brakes included in the drive device **240,** thus controlling the speed of the work vehicle **100.**

The ECU **182** controls the hydraulic device or the electric motor included in the steering device **106** based on a measurement value of the steering wheel sensor **152,** thus controlling the steering of the work vehicle **100.**

In order to cause the implement **300** to perform a desired operation, the ECU **183** controls the operations of the three-point link, the PTO shaft and the like that are included in the linkage device **108.** Also, the ECU **183** generates a signal to control the operation of the implement **300,** and transmits this signal from the communicator **190** to the implement **300.**

Based on data output from the GNSS unit **110,** the cameras **120,** the obstacle sensors **130,** the LiDAR sensor **140** and the sensors **150,** the ECU **184** performs computation and control for achieving automated driving. For example, the ECU **184** specifies the position of the work vehicle **100** based on the data output from at least one of the GNSS unit **110,** the cameras **120** and the LiDAR sensor **140.** Inside the field, the ECU **184** may determine the position of the work vehicle **100** based only on the data output from the GNSS unit **110.** The ECU **184** may estimate or correct the position of the work vehicle **100** based on the data acquired by the cameras **120** or the LiDAR sensor **140.** Use of the data acquired by the cameras **120** or the LiDAR sensor **140** allows the accuracy of the positioning to be further improved. Outside the field, the ECU **184** estimates the position of the work vehicle **100** by use of the data output from the LiDAR sensor **140** or the cameras **120.** For example, the ECU **184** may estimate the position of the work vehicle **100** by matching the data output from the LiDAR sensor **140** or the cameras **120** against the environment map. During automated driving, the ECU **184** performs computation necessary for the work vehicle **100** to travel along a target path or a local path, based on the estimated position of the work vehicle **100.** The ECU **184** sends the ECU **181** a command to change the speed, and sends the ECU **182** a command to change the steering angle. In response to the command to change the speed, the ECU **181** controls the prime mover **102,** the transmission **103** or the brakes to change the speed of the work vehicle **100.** In response to the command to change the steering angle, the ECU **182** controls the steering device **106** to change the steering angle.

While the work vehicle **100** is traveling along the target path, the ECU **185** consecutively generates a local path along which the work vehicle **100** can avoid an obstacle. During travel of the work vehicle **100,** the ECU **185** recognizes an obstacle existing in the surroundings of the work vehicle **100** based on the data output from the cameras **120,** the obstacle sensors **130** and the LiDAR sensor **140.** The ECU **185** generates a local path such that the work vehicle **100** avoids the recognized obstacle. The ECU **185** may have a function of generating a target path instead of the management device **160.** In that case, the ECU **185** generates the target path based on data output from the GNSS unit **110,** the camera **120,** and/or the LiDAR sensor **140** while the work vehicle **100** is traveling to collect data. Examples of methods for generating the target path are as described referring to FIG. **3** to FIG. **7D****.** Note that the target path may be generated not only by the management device **600** or the ECU **185,** but also by other devices such as the operation terminal **200** or the terminal device **400,** for example.

Through the actions of these ECUs, the controller **180** realizes automated driving. During automated driving, the controller **180** controls the drive device **240** based on the measured or estimated position of the work vehicle **100** and on the target path. As a result, the controller **180** can cause the work vehicle **100** to travel along the target path.

The plurality of ECUs included in the controller **180** can communicate with each other in accordance with a vehicle bus standard such as, for example, a CAN (Controller Area Network). Instead of the CAN, faster communication methods such as Automotive Ethernet (registered trademark) may be used. Although the ECUs **181** to **185** are illustrated as individual blocks in FIG. **10****,** the function of each of the ECU **181** to **185** may be implemented by a plurality of ECUs. Alternatively, an onboard computer that integrates the functions of at least some of the ECUs **181** to **185** may be provided. The controller **180** may include ECUs other than the ECUs **181** to **185,** and any number of ECUs may be provided in accordance with functionality. Each ECU includes a processing circuit including one or more processors.

The communicator **190** is a device including a circuit communicating with the implement **300,** the terminal device **400** and the management device **600.** The communicator **190** includes circuitry to perform exchanges of signals complying with an ISOBUS standard such as ISOBUS-TIM, for example, between itself and the communicator **390** of the implement **300.** This allows the implement **300** to perform a desired operation, or allows information to be acquired from the implement **300.** The communicator **190** may further include an antenna and a communication circuit to exchange signals via the network **80** with communicators of the terminal device **400** and the management device **600.** The network **80** may include a 3G, 4G, 5G, or any other cellular mobile communications network and the Internet, for example. The communicator **190** may have a function of communicating with a mobile terminal that is used by a supervisor who is situated near the work vehicle **100.** With such a mobile terminal, communication may be performed based on any arbitrary wireless communication standard, e.g., Wi-Fi (registered trademark), 3G, 4G, 5G or any other cellular mobile communication standard, or Bluetooth (registered trademark) .

The operation terminal **200** is a terminal for the user to perform a manipulation related to the travel of the work vehicle **100** and the operation of the implement **300,** and is also referred to as a virtual terminal (VT). The operation terminal **200** may include a display such as a touch screen panel, and/or one or more buttons. The display may be a display such as a liquid crystal display or an organic light-emitting diode (OLED) display, for example. By manipulating the operation terminal **200,** the user can perform various manipulations, such as, for example, switching ON/OFF the automated driving mode, recording or editing an environment map, setting a target path, and switching ON/OFF the implement **300.** At least a portion of these manipulations may also be realized by manipulating the operation switches **210.** The operation terminal **200** may be configured so as to be detachable from the work vehicle **100.** A user who is at a remote place from the work vehicle **100** may manipulate the detached operation terminal **200** to control the operation of the work vehicle **100.** Instead of the operation terminal **200,** the user may manipulate a computer on which necessary application software is installed, for example, the terminal device **400,** to control the operation of the work vehicle **100.**

FIG. **12** is a diagram showing an example of the operation terminal **200** and an example of the operation switches **210** both provided in the cabin **105.** In the cabin **105,** the switches **210,** including a plurality of switches that are manipulable to the user, are disposed. The operation switches **210** may include, for example, a switch to select the gear shift as to a main gear shift or a range gear shift, a switch to switch between automated driving mode and a manual driving mode, a switch to switch between forward travel and backward travel, a switch to raise or lower the implement **300,** and the like. In the case where the work vehicle **100** only performs unmanned driving and lacks human driving functionality, the work vehicle **100** does not need to include the operation switches **210.**

The drive device **340** in the implement **300** shown in FIG. **10** performs operations necessary for the implement **300** to perform predetermined work. The drive device **340** includes a device suitable for uses of the implement **300,** for example, a hydraulic device, an electric motor, a pump or the like. The controller **380** controls the operation of the drive device **340.** In response to a signal that is transmitted from the work vehicle **100** via the communicator **390,** the controller **380** causes the drive device **340** to perform various operations. Moreover, a signal that is in accordance with the state of the implement **300** can be transmitted from the communicator **390** to the work vehicle **100.**

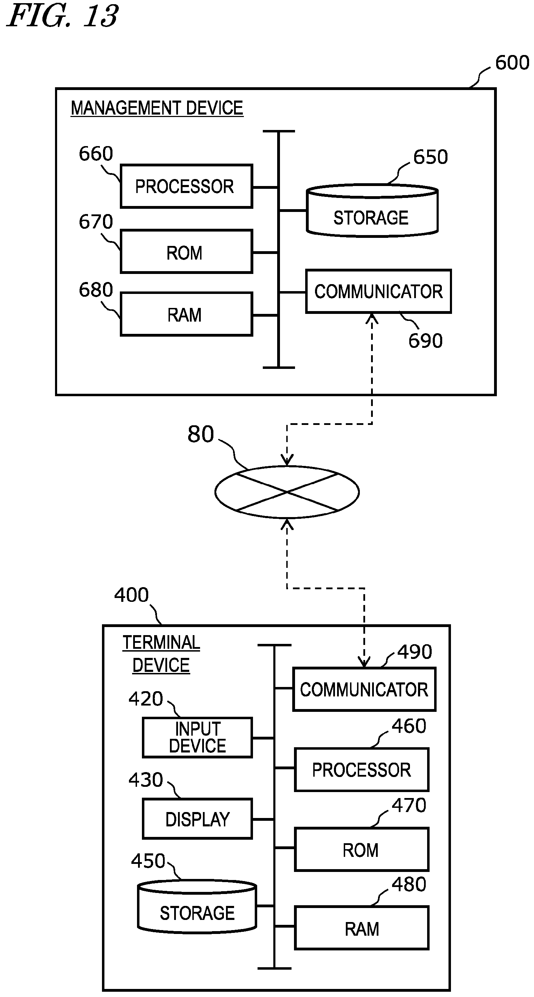

Now, a configuration of the management device **600** and the terminal device **400** will be described with reference to FIG. **13.** FIG. **13** is a block diagram showing an example of schematic hardware configuration of the management device **600** and the terminal device **400.**

The management device **600** includes a storage **650,** a processor **660,** a ROM (Read Only Memory) **670,** a RAM (Random Access Memory) **680,** and a communicator **690.** These component elements are communicably connected to each other via a bus. The management device **600** may function as a cloud server to manage the schedule of the agricultural work to be performed by the work vehicle **100** in a field and support agriculture by use of the data managed by the management device **600** itself. The user can input information necessary to create a work plan by use of the terminal device **400** and upload the information to the management device **600** via the network **80.** The management device **600** can create a schedule of agricultural work, that is, a work plan based on the information. The management device **600** can further generate or edit an environment map and generate an automated travel route for the work vehicle **100.** The environment map may be distributed from a computer external to the management device **600.**

The communicator **690** is a communication module to communicate with the work vehicle **100** and the terminal device **400** via the network **80.** The communicator **690** can perform wired communication in compliance with communication standards such as, for example, IEEE1394 (registered trademark) or Ethernet (registered trademark). The communicator **690** may perform wireless communication in compliance with Bluetooth (registered trademark) or Wi-Fi, or cellular mobile communication based on 3G, 4G, 5G or any other cellular mobile communication standard.

The processor **660** may be, for example, a semiconductor integrated circuit including a central processing unit (CPU). The processor **660** may be realized by a microprocessor or a microcontroller. Alternatively, the processor **660** may be realized by an FPGA (Field Programmable Gate Array), a GPU (Graphics Processing Unit), an ASIC (Application Specific Integrated Circuit) or an ASSP (Application Specific Standard Product) each including a CPU, or a combination of two or more selected from these circuits. The processor **660** consecutively executes a computer program, describing commands to execute at least one process, stored in the ROM **670** and thus realizes a desired process.

The ROM **670** is, for example, a writable memory (e.g., PROM), a rewritable memory (e.g., flash memory) or a memory which can only be read from but cannot be written to. The ROM **670** stores a program to control operations of the processor **660.** The ROM **670** does not need to be a single storage medium, and may be an assembly of a plurality of storage mediums. A portion of the assembly of the plurality of storage memories may be a detachable memory.

The RAM **680** provides a work area in which the control program stored in the ROM **670** is once developed at the time of boot. The RAM **680** does not need to be a single storage medium, and may be an assembly of a plurality of storage mediums.

The storage **650** mainly functions as a storage for a database. The storage **650** may be, for example, a magnetic storage or a semiconductor storage. An example of the magnetic storage is a hard disc drive (HDD). An example of the semiconductor storage is a solid state drive (SSD). The storage **650** may be a device independent from the management device **600.** For example, the storage **650** may be a storage connected to the management device **600** via the network **80,** for example, a cloud storage.

The terminal device **400** includes an input device **420,** a display **430,** a storage **450,** a processor **460,** a ROM **470,** a RAM **480,** and a communicator **490.** These component elements are communicably connected to each other via a bus. The input device **420** is a device to convert an instruction from the user into data and input the data to a computer. The input device **420** may be, for example, a keyboard, a mouse or a touch panel. The display **430** may be, for example, a liquid crystal display or an organic EL display. The processor **460,** the ROM **470,** the RAM **480,** the storage **450** and the communicator **490** are substantially the same as the corresponding component elements described above regarding the example of the hardware configuration of the management device **600,** and will not be described in repetition.

### [2. Operation]

Next, an example operation of automated travel of the work vehicle **100** will be described. The work vehicle **100** according to the present embodiment can automatically travel both inside and outside a field. Inside the field, the work vehicle **100** drives the implement **300** to perform predetermined agricultural work while traveling along a preset target path. When detecting an obstacle by the obstacle sensors **130** thereof while traveling inside the field, the work vehicle **100** halts traveling and performs operations of presenting an alarm sound from the buzzer **220,** transmitting an alert signal to the terminal device **400** and the like. Inside the field, the positioning of the work vehicle **100** is performed based mainly on data output from the GNSS unit **110.** Meanwhile, outside the field, the work vehicle **100** automatically travels along a target path set for an agricultural road or a general road outside the field. While traveling outside the field, the work vehicle **100** travels while detecting obstacles based on data acquired by the cameras **120** or the LiDAR **140.** When an obstacle is detected outside the field, the work vehicle **100** avoids the obstacle or halts at the point. Outside the field, the position of the work vehicle **100** is estimated based on data output from the LiDAR sensor **140** or the cameras **120** in addition to positioning data output from the GNSS unit **110.**

Hereinafter, an example of the operation of the work vehicle **100** performing automated travel inside the field will be described.

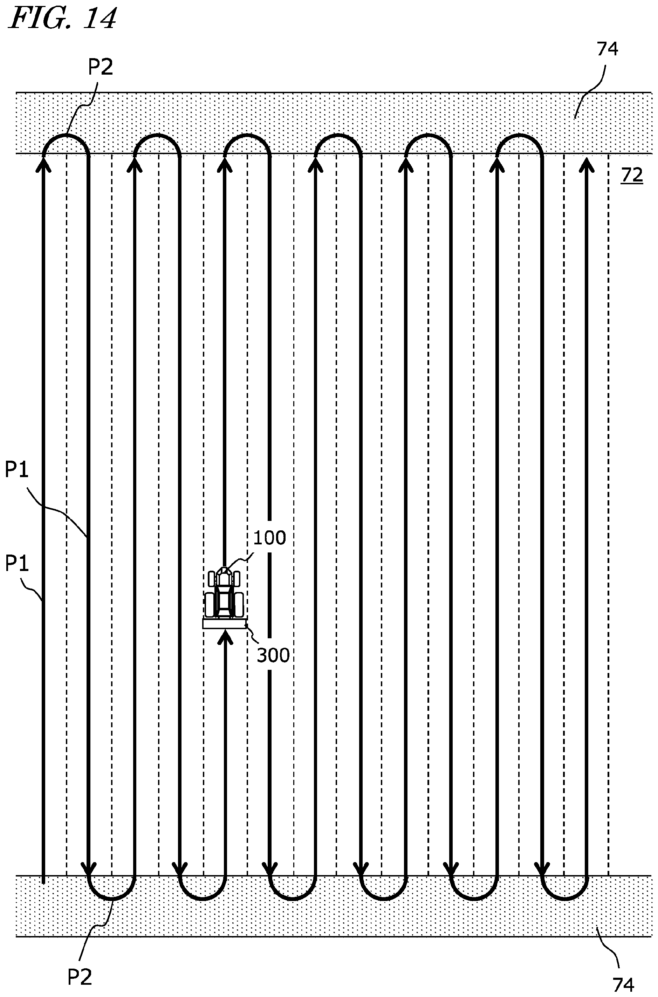

FIG. **14** is a diagram schematically showing an example of the work vehicle **100** automatically traveling along a target path in a field. In this example, the field includes a work area **72,** in which the work vehicle **100** performs work by using the implement **300,** and headlands **74,** which are located near outer edges of the field. The user may previously specify which regions of the field on the map would correspond to the work area **72** and the headlands **74.** The target path in this example includes a plurality of main paths **P1** parallel to each other and a plurality of turning paths P2 interconnecting the plurality of main paths **P1**. The main paths **P1** are located in the work area **72,** whereas the turning paths **P2** are located in the headlands **74.** Although each of the main paths **P1** in FIG. **14** is illustrated as a linear path, each main path **P1** may also include a curved portion(s). Broken lines in FIG. **14** depict the working breadth of the implement **300.** The working breadth is previously set and recorded in the storage **170.** The working breadth may be set and recorded by the user manipulating the operation terminal 200 or the terminal device **400.** Alternatively, the working breadth may be automatically recognized and recorded when the implement **300** is connected to the work vehicle **100.** The interval between the plurality of main paths **P1** may be set so as to be matched to the working breadth. The target path may be generated based on the manipulation made by the user, before automated driving is begun. The target path may be generated so as to cover the entire work area **72** in the field, for example. Along the target path shown in FIG. **14****,** the work vehicle **100** automatically travels while repeating a reciprocating motion from a beginning point of work to an ending point of work. Note that the target path shown in FIG. **14** is merely an example, and the target path may be arbitrarily determined.

Now, an example control by the controller **180** during automated driving will be described.

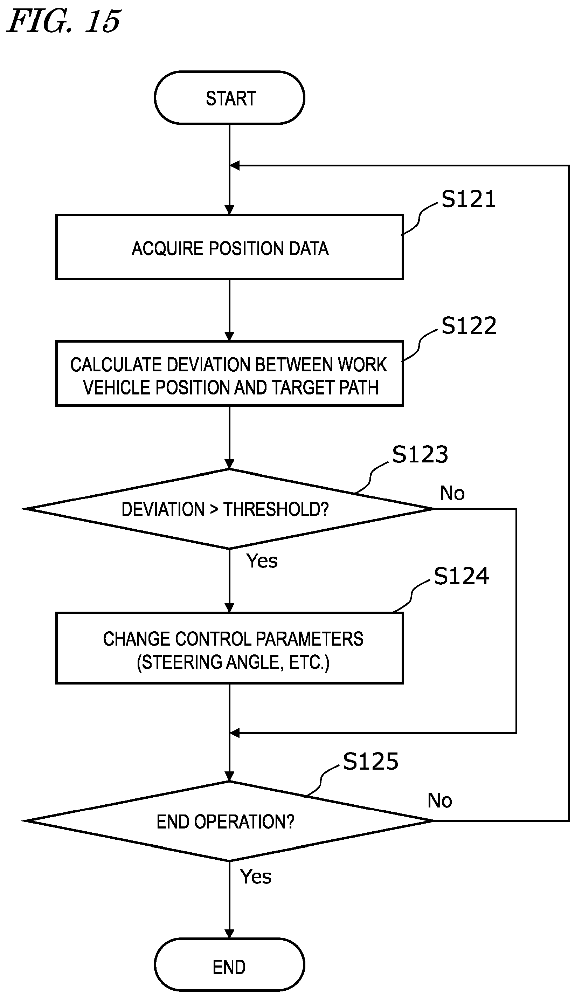

FIG. **15** is a flowchart showing an example operation of steering control to be performed by the controller **180** during automated driving. During travel of the work vehicle **100,** the controller **180** performs automatic steering by performing the operation from steps **S121** to **S125** shown in FIG. **15****.** The speed of the work vehicle **100** may be, for example, maintained at a previously-set speed or adjusted according to the situation. First, during travel of the work vehicle **100,** the controller **180** acquires data representing the position of the work vehicle **100** that is generated by the GNSS unit **110** (step **S121).** Next, the controller **180** calculates a deviation between the position of the work vehicle **100** and the target path (step **S122).** The deviation represents the distance between the position of the work vehicle **100** and the target path at that moment. The controller **180** determines whether the calculated deviation in position exceeds the previously-set threshold or not (step **S123).** If the deviation exceeds the threshold, the controller **180** changes a control parameter of the steering device included in the drive device **240** so as to reduce the deviation, thus changing the steering angle (step **S124).** If the deviation does not exceed the threshold at step **S123,** the operation of step **S124** is omitted. At the following step **S125,** the controller **180** determines whether a command to end the operation has been received or not. The command to end the operation may be given when the user has instructed that automated driving be suspended through remote manipulations, or when the work vehicle **100** has arrived at the destination, for example. If the command to end the operation has not been given, the control returns to step **S121** and the controller **180** performs substantially the same operation based on a newly measured position of the work vehicle **100.** The controller **180** repeats the operation from steps **S121** to **S125** until a command to end the operation is given. The aforementioned operation is executed by the ECUs **182** and **184** in the controller **180.**

In the example shown in FIG. **15****,** the controller **180** controls the drive device **240** based only on the deviation between the position of the work vehicle **100** as identified by the GNSS unit **110** and the target path. Alternatively, a deviation in terms of directions may further be considered in the control. For example, when a directional deviation exceeds a previously-set threshold, where the directional deviation is an angle difference between the orientation of the work vehicle **100** as identified by the GNSS unit **110** and the direction of the target path, the controller **180** may change the control parameter of the steering device of the drive device **240** (e.g., steering angle) in accordance with the deviation.

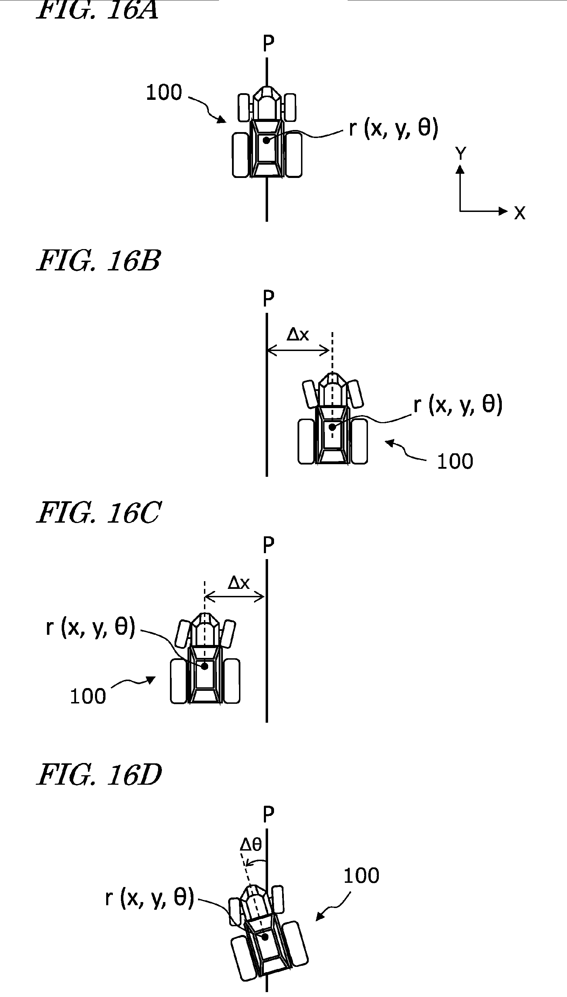

Hereinafter, with reference to FIGS. **16A to 16D****,** an example of steering control by the controller **180** will be described more specifically.

FIG. **16A** is a diagram showing an example of the work vehicle **100** traveling along a target path **P.** FIG. **16B** is a diagram showing an example of the work vehicle **100** at a position which is shifted rightward from the target path **P.** FIG. **16C** is a diagram showing an example of the work vehicle **100** at a position which is shifted leftward from the target path **P.** FIG. **16D** is a diagram showing an example of the work vehicle **100** oriented in an inclined direction with respect to the target path **P.** In these figures, the pose, i.e., the position and orientation, of the work vehicle **100** as measured by the GNSS unit **110** is expressed as r(x,y,θ). Herein, (x,y) are coordinates representing the position of a reference point on the work vehicle **100** in an XY coordinate system, which is a two-dimensional coordinate system fixed to the globe. In the examples shown in FIGS. 9A to **9D,** the reference point on the work vehicle **100** is at a position, on the cabin, where a GNSS antenna is disposed, but the reference point may be at any arbitrary position. θ is an angle representing the measured orientation of the work vehicle **100.** Although the target path **P** is shown parallel to the Y axis in the examples illustrated in these figures, the target path **P** may not necessarily be parallel to the Y axis, in general.

As shown in FIG. **16A****,** in the case where the position and orientation of the work vehicle **100** are not deviated from the target path **P,** the controller **180** maintains the steering angle and speed of the work vehicle **100** without changing them.

As shown in FIG. **16B****,** when the position of the work vehicle **100** is shifted rightward from the target path **P,** the controller **180** changes the steering angle so that the traveling direction of the work vehicle **100** will be inclined leftward, thus bringing the work vehicle **100** closer to the path **P.** At this point, not only the steering angle but also the speed may be changed. The magnitude of the steering angle may be adjusted in accordance with the magnitude of a positional deviation Δx, for example.

As shown in FIG. **16C****,** when the position of the work vehicle **100** is shifted leftward from the target path **P,** the controller **180** changes the steering angle so that the traveling direction of the work vehicle **100** will be inclined rightward, thus bringing the work vehicle **100** closer to the path **P.** In this case, too, not only the steering angle but also the speed may be changed. The amount of change of the steering angle may be adjusted in accordance with the magnitude of the positional deviation Δx, for example.

As shown in FIG. **16D****,** in the case where the position of the work vehicle **100** is not considerably deviated from the target path **P** but its orientation is nonetheless different from the direction of the target path **P,** the controller **180** changes the steering angle so that the directional deviation Δθ will become smaller. In this case, too, not only the steering angle but also the speed may be changed. The magnitude of the steering angle may be adjusted in accordance with the magnitudes of the positional deviation Δx and the directional deviation Δθ, for example. For instance, the amount of change of the steering angle (which is in accordance with the directional deviation Δθ) may be increased as the absolute value of the positional deviation Δx decreases. When the positional deviation Δx has a large absolute value, the steering angle will be changed greatly in order for the work vehicle **100** to return to the path **P,** so that the directional deviation Δθ will inevitably have a large absolute value. Conversely, when the positional deviation Δx has a small absolute value, the directional deviation Δθ needs to become closer to zero. Therefore, it may be advantageous to introduce a relatively large weight (i.e., control gain) for the directional deviation Δθ in determining the steering angle.

For the steering control and speed control of the work vehicle **100,** control techniques such as PID control or MPC (Model Predictive Control) may be applied. Applying these control techniques will make for smoothness of the control of bringing the work vehicle **100** closer to the target path **P.**

Note that, when an obstacle is detected by one or more obstacle sensors **130** during travel, the controller **180** halts the work vehicle **100.** At this point, the controller 180 may cause the buzzer **220** to present an alarm sound or may transmit an alert signal to the terminal device **400.** In the case where the obstacle is avoidable, the controller **180** may control the drive device **240** such that the obstacle is avoided.

The work vehicle **100** according to the present embodiment can perform automated travel outside a field as well as inside the field. Outside the field, the controller **180** performs steering control and speed control along the target path (automated travel route) generated by the method described above. The controller **180** is able to detect an object located at a relatively distant position from the work vehicle **100** (e.g., another vehicle, a pedestrian, etc.) based on data output from the cameras **120** or the LiDAR sensor **140.** The controller **180** generates a local path such that the local path avoids the detected object, and performs speed control and steering control along the local path. In this manner, automated travel on a road outside the field can be realized.

As described above, the work vehicle **100** according to the present embodiment can automatically travel inside the field and outside the field in an unmanned manner. In the storage **170,** an environment map of a region including a plurality of fields and roads around the fields, and a target path, are recorded. In the case of traveling on a road, the work vehicle **100** travels along the target path while sensing the surroundings thereof by use of the sensing devices such as the cameras **120** and the LiDAR sensor **140,** with the implement **300** being raised. During travel, the controller **180** consecutively generates a local path and causes the work vehicle **100** to travel along the local path. This allows the work vehicle **100** to perform automated travel while avoiding obstacles. During travel, the target path may be changed in accordance with the state.

As described above, according to the present embodiment, the actual travel route obtained when the work vehicle **100** is manually driven can be used for automated driving route generation. The automated driving route is generated by excluding actual travel routes obtained when the work vehicle **100** performs an action to avoid oncoming vehicles. Thus, the automated travel route is prevented from including inappropriate routes associated with avoidance actions, thereby generating an appropriate automated travel route. In accordance with the automated travel route thus generated, the work vehicle **100** can, for example, execute automated travel on roads around the field appropriately.

The system for generating an automated travel route or performing automated driving control according to the above embodiments can also be retrofitted to agricultural machines that do not have these functions. Such systems can be manufactured and sold independently of agricultural machines. Computer programs used in such systems can also be manufactured and sold independently of agricultural machines. Computer programs can be provided, for example, stored in a computer-readable non-transitory storage medium. Computer programs can also be provided as downloads via an electrical telecommunication line (e.g., the Internet).

### INDUSTRIAL APPLICABILITY

The technology of the present disclosure can be applied to a system for generating an automated travel route for agricultural machines, such as tractors, harvesters, rice transplanters, vehicles for crop management, vegetable transplanters, mowers, seeders, spreaders, or agricultural robots.

### REFERENCE SIGNS LIST

10: Route generation system, 11: Input interface, 12: Output interface, 15: Processing device, 16: Storage, 20: Vehicle, 21: GNSS receiver, 22: Camera, 23: Storage, 30: Agricultural machine, 31: Localization device, 32: Travel controller, 33: Storage, 40: Input device, 45: Display, 50: GNSS satellite, 60: Reference station, 70: Field, 72: Work area, 74: Headland, 75: Farm road, 78: Storage shed, 80: Network, 90: Oncoming vehicle, 91, 92: Route, 93: Avoidance route, 94: Complementing route, 100: Work vehicle, 101: Vehicle, 102: Prime mover (engine), 103: Transmission, 104: Wheel, 105: Cabin, 106: Steering device, 107: Driver seat, 108: Link device, 110: GNSS unit, 111: GNSS receiver, 112: RTK receiver, 115: Inertial measurement unit (IMU), 116: Processing circuit, 120: Camera, 130: Obstacle sensor, 140: LiDAR sensor, 150: Sensors, 152: Steering wheel sensor, 154: Steering angle sensor, 156: Axle sensor, 160: Control system, 170: Storage, 180: Controller, 181 to 185: ECUs, 190: Communicator, 200: Operation terminal, 210: Operation switches, 220: Buzzer, 240: Drive device, 300: Implement, 340: Drive device, 380: Controller, 390: Communicator, 400: Terminal device, 420: Input device, 430: Display, 450: Storage, 460: Processor, 470: ROM, 480: RAM, 490: Communicator, 600: Management computer, 660: Processor, 670: Storage, 670: ROM, 680: RAM, 690: Communicator

## Claims

1. A route generation system (10) for automated travel of an agricultural machine (30), the system (10) comprising:
a processing device (15) configured to generate an automated travel route of the agricultural machine (30),
wherein the route generation system (10) is **characterized in that** the processing device (15) is configured to:
acquire, from a vehicle (20) that manually travels along a route while recording a travel path, data representing the travel path;
detect an avoidance action performed by the vehicle (20) to avoid an oncoming vehicle (90) based on at least one of:
- a video image taken by a camera (120) mounted on the vehicle (20) while the vehicle (20) is traveling,
- a change over time of a position of the vehicle (20) indicated by the travel path, or
- a record of steering and/or accelerating and/or decelerating operation of the vehicle (20);
remove, from the travel path, a path associated with the avoidance action; and
generate an automated travel route of the agricultural machine (30) based on the travel path from which the path associated with the avoidance action has been removed.

2. The route generation system (10) according to claim 1, wherein:
the processing device (15) is configured todetect the avoidance action based on the video image and determine and remove the path associated with the avoidance action from the travel path.

3. The route generation system (10) according to claim 2, wherein the processing device (15) is configured to:
identify an oncoming vehicle (90) approaching the vehicle (20) from the video image; and
remove, as the path associated with an avoidance action, a path corresponding to at least a portion of a period from when the oncoming vehicle (90) is identified to when the oncoming vehicle (90) is no longer identified, from the travel path.

4. The route generation system (10) according to claim 1, wherein the processing device (15) is configured to determine and remove the path associated with the avoidance action from the travel path.

5. The route generation system (10) according to any one of claims 1 to 4, wherein the processing device (15) is configured to detect, as the avoidance action, at least one of traveling backward, and changing direction to avoid an oncoming vehicle (90).

6. The route generation system (10) according to any one of claims 1 to 4, wherein the processing device (15) is configured to acquire position data sequentially output from a GNSS receiver (111) mounted on the vehicle (20) as data that represents the travel path.

7. The route generation system (10) according to any one of claims 1 to 4, wherein the processing device (15) is configured to generate, as the automated travel route, a route that is defined by a plurality of waypoints each including information on position and speed.

8. The route generation system (10) according to any one of claims 1 to 4, wherein the processing device (15) is configured to generate the automated travel route by performing a process of complementing a portion that has been removed from the travel path.

9. The route generation system (10) according to claim 8, wherein the processing device (15) is configured to generate the automated travel route by complementing the portion that has been removed from the travel path with a straight complementing route.

10. The route generation system (10) according to claim 8, wherein the processing device (15) is configured to:
display, on a display (45), the travel path with the path associated with the avoidance action removed; and
complement the portion that has been removed from the travel path in response to an operation by a user to confirm a complementing route.

11. The route generation system (10) according to any one of claims 1 to 4, wherein the processing device (15) is configured to perform a process of generating the automated travel route when generating a route for the agricultural machine (30) to perform automated travel outside a field (70).

12. A route generation method for automated travel of an agricultural machine (30), the method comprising:
acquiring, from a vehicle (20) that manually travels along a route while recording a travel path, data representing the travel path;
detecting an avoidance action performed by the vehicle (20) to avoid an oncoming vehicle (90) based on at least one of:
- a video image taken by a camera (120) mounted on the vehicle (20) while the vehicle (20) is traveling,
- a change over time of a position of the vehicle (20) indicated by the travel path, or
- a record of steering and/or accelerating and/or decelerating operation of the vehicle (20);
removing, from the travel path, a path associated with an avoidance action; and
generating an automated travel route of the agricultural machine (30) based on the travel path from which the path associated with the avoidance action has been removed.

## Patentansprüche

1. Routengenerierungssystem (10) für automatisiertes Fahren einer landwirtschaftlichen Maschine (30), das System (10) umfassend:
eine Verarbeitungsvorrichtung (15), die konfiguriert ist, um eine automatisierte Fahrtroute der landwirtschaftlichen Maschine (30) zu generieren,
wobei das Routengenerierungssystem (10) **dadurch gekennzeichnet ist, dass** die Verarbeitungsvorrichtung (15) zu Folgendem konfiguriert ist:
Erfassen, von einem Fahrzeug (20), das manuell entlang einer Route fährt während es einen Fahrweg aufzeichnet, von Daten, die den Fahrweg darstellen;
Erkennen einer Ausweichaktion, die von dem Fahrzeug (20) durchgeführt wird, um einem entgegenkommenden Fahrzeug (90) auszuweichen, basierend auf mindestens einem von Folgenden:
- einem Videobild, das von einer Kamera (120) aufgenommen wird, die an dem Fahrzeug (20) montiert ist, während das Fahrzeug (20) fährt,
- einer zeitlichen Veränderung einer Position des Fahrzeugs (20), die durch den Fahrweg angegeben wird, oder
- einem Protokoll eines Lenk- und/oder Beschleunigungs- und/oder Verzögerungsvorgangs des Fahrzeugs (20);
Entfernen, aus dem Fahrweg, eines mit der Ausweichaktion assoziierten Wegs; und
Generieren einer automatisierten Fahrtroute der landwirtschaftlichen Maschine (30) basierend auf dem Fahrweg, aus dem der mit der Ausweichaktion assoziierte Weg entfernt wurde.

2. Routengenerierungssystem (10) nach Anspruch 1, wobei:
die Verarbeitungsvorrichtung (15) konfiguriert ist, um die Ausweichaktion basierend auf dem Videobild zu erkennen und den mit der Ausweichaktion assoziierten Weg aus dem Fahrweg zu bestimmen und zu entfernen.

3. Routengenerierungssystem (10) nach Anspruch 2, wobei die Verarbeitungsvorrichtung (15) zu Folgendem konfiguriert ist:
Identifizieren eines entgegenkommenden Fahrzeugs (90), das sich dem Fahrzeug (20) nähert, aus dem Videobild; und
Entfernen, als den Weg, der einer Ausweichaktion assoziiert ist, eines Wegs, der zumindest einem Teil eines Zeitraums entspricht, von dem Zeitpunkt, zu dem das entgegenkommende Fahrzeug (90) identifiziert wird, bis zu dem Zeitpunkt, zu dem das entgegenkommende Fahrzeug (90) nicht mehr identifiziert wird, aus dem Fahrweg.

4. Routengenerierungssystem (10) nach Anspruch 1, wobei die Verarbeitungsvorrichtung (15) konfiguriert ist, um den mit der Ausweichaktion assoziierten Weg aus dem Fahrweg zu bestimmen und zu entfernen.

5. Routengenerierungssystem (10) nach einem der Ansprüche 1 bis 4, wobei die Verarbeitungsvorrichtung (15) konfiguriert ist, um als Ausweichaktion mindestens eines von Rückwärtsfahren und Richtungsänderung zum Ausweichen vor einem entgegenkommenden Fahrzeug (90) zu erkennen.

6. Routengenerierungssystem (10) nach einem der Ansprüche 1 bis 4, wobei die Verarbeitungsvorrichtung (15) konfiguriert ist, um Positionsdaten, die fortlaufend von einem am Fahrzeug (20) angebrachten GNSS-Empfänger (111) ausgegeben werden, als Daten zu erfassen, die den Fahrweg darstellen.

7. Routengenerierungssystem (10) nach einem der Ansprüche 1 bis 4, wobei die Verarbeitungsvorrichtung (15) konfiguriert ist, um als automatisierte Fahrtroute eine Route zu generieren, die durch eine Vielzahl von Wegpunkten definiert ist, wobei jeder Wegpunkt Informationen über Position und Geschwindigkeit umfasst.

8. Routengenerierungssystem (10) nach einem der Ansprüche 1 bis 4, wobei die Verarbeitungsvorrichtung (15) konfiguriert ist, um die automatisierte Fahrtroute zu generieren, indem ein aus dem Fahrweg entfernter Abschnitt ergänzt wird.

9. Routengenerierungssystem (10) nach Anspruch 8, wobei die Verarbeitungsvorrichtung (15) konfiguriert ist, um die automatisierte Fahrtroute zu generieren, indem der aus dem Fahrweg entfernte Abschnitt durch eine gerade ergänzende Route ergänzt wird.

10. Routengenerierungssystem (10) nach Anspruch 8, wobei die Verarbeitungsvorrichtung (15) zu Folgendem konfiguriert ist:
Anzeigen, auf einer Anzeige (45), des Fahrwegs mit entferntem, mit der Ausweichaktion assoziiertem Weg; und
Ergänzen des aus dem Fahrweg entfernten Abschnitts als Reaktion auf eine Bedienung durch einen Benutzer zur Bestätigung einer ergänzenden Route.

11. Routengenerierungssystem (10) nach einem der Ansprüche 1 bis 4, wobei die Verarbeitungsvorrichtung (15) konfiguriert ist, um einen Prozess zum Generieren der automatisierten Fahrtroute durchzuführen, wenn eine Route für die landwirtschaftliche Maschine (30) zum Durchführen einer automatisierten Fahrt außerhalb eines Felds (70) generiert wird.

12. Routengenerierungsverfahren für automatisiertes Fahren einer landwirtschaftlichen Maschine (30), das Verfahren umfassend:
Erfassen, von einem Fahrzeug (20), das manuell entlang einer Route fährt während es einen Fahrweg aufzeichnet, von Daten, die den Fahrweg darstellen;
Erkennen einer Ausweichaktion, die von dem Fahrzeug (20) durchgeführt wird, um einem entgegenkommenden Fahrzeug (90) auszuweichen, basierend auf mindestens einem von Folgenden:
- einem Videobild, das von einer Kamera (120) aufgenommen wird, die an dem Fahrzeug (20) montiert ist, während das Fahrzeug (20) fährt,
- einer zeitlichen Veränderung einer Position des Fahrzeugs (20), die durch den Fahrweg angegeben wird, oder
- einem Protokoll eines Lenk- und/oder Beschleunigungs- und/oder Verzögerungsvorgangs des Fahrzeugs (20);
Entfernen, aus dem Fahrweg, eines mit der Ausweichaktion assoziierten Wegs; und
Generieren einer automatisierten Fahrtroute der landwirtschaftlichen Maschine (30) basierend auf dem Fahrweg, aus dem der mit der Ausweichaktion assoziierte Weg entfernt wurde.

## Revendications

1. Système de génération d'itinéraire (10) pour le déplacement automatisé d'une machine agricole (30), le système (10) comprenant :
un dispositif de traitement (15) configuré pour générer un itinéraire de déplacement automatisé de la machine agricole (30),
dans lequel le système de génération d'itinéraire (10) est **caractérisé en ce que** le dispositif de traitement (15) est configuré pour :
acquérir, à partir d'un véhicule (20) qui se déplace manuellement le long d'un itinéraire tout en enregistrant un trajet, des données représentant le trajet ;
détecter une action d'évitement effectuée par le véhicule (20) pour éviter un véhicule venant en sens inverse (90) sur la base d'au moins l'un des éléments suivants :
- une image vidéo prise par une caméra (120) montée sur le véhicule (20) pendant que le véhicule (20) se déplace,
- une évolution dans le temps d'une position du véhicule (20) indiquée par le trajet, ou
- un enregistrement d'une opération de braquage et/ou d'accélération et/ou de décélération du véhicule (20) ;
supprimer, du trajet, un segment associé à l'action d'évitement ; et
générer un itinéraire de déplacement automatisé de la machine agricole (30) sur la base du trajet dont le segment associé à l'action d'évitement a été supprimé.

2. Système de génération d'itinéraire (10) selon la revendication 1, dans lequel :
le dispositif de traitement (15) est configuré pour détecter l'action d'évitement sur la base de l'image vidéo et pour déterminer et supprimer du trajet, le segment associé à l'action d'évitement.

3. Système de génération d'itinéraire (10) selon la revendication 2, dans lequel le dispositif de traitement (15) est configuré pour :
identifier un véhicule venant en sens inverse (90) s'approchant du véhicule (20) à partir de l'image vidéo ; et
supprimer du trajet, en tant que segment associé à une action d'évitement, un segment correspondant à au moins une partie d'une période allant du moment où le véhicule venant en sens inverse (90) est identifié jusqu'au moment où le véhicule venant en sens inverse (90) n'est plus identifié.

4. Système de génération d'itinéraire (10) selon la revendication 1, dans lequel le dispositif de traitement (15) est configuré pour déterminer et supprimer du trajet, le segment associé à l'action d'évitement.

5. Système de génération d'itinéraire (10) selon l'une quelconque des revendications 1 à 4, dans lequel le dispositif de traitement (15) est configuré pour détecter, en tant qu'action d'évitement, au moins l'un parmi un déplacement en marche arrière et un changement de direction pour éviter un véhicule venant en sens inverse (90).

6. Système de génération d'itinéraire (10) selon l'une quelconque des revendications 1 à 4, dans lequel le dispositif de traitement (15) est configuré pour acquérir des données de position fournies séquentiellement en sortie par un récepteur GNSS (111) monté sur le véhicule (20) en tant que données représentant le trajet.

7. Système de génération d'itinéraire (10) selon l'une quelconque des revendications 1 à 4, dans lequel le dispositif de traitement (15) est configuré pour générer, en tant qu'itinéraire de déplacement automatisé, un itinéraire défini par une pluralité de points de passage comprenant chacun des informations sur la position et la vitesse.

8. Système de génération d'itinéraire (10) selon l'une quelconque des revendications 1 à 4, dans lequel le dispositif de traitement (15) est configuré pour générer l'itinéraire de déplacement automatisé en effectuant un processus consistant à compléter une partie qui a été supprimée du trajet.

9. Système de génération d'itinéraire (10) selon la revendication 8, dans lequel le dispositif de traitement (15) est configuré pour générer l'itinéraire de déplacement automatisé en complétant la partie qui a été supprimée du trajet par un itinéraire de complément rectiligne.

10. Système de génération d'itinéraire (10) selon la revendication 8, dans lequel le dispositif de traitement (15) est configuré pour :
afficher, sur un afficheur (45), le trajet dont le segment associé à l'action d'évitement a été supprimé ; et
compléter la partie qui a été supprimée du trajet en réponse à une opération d'un utilisateur pour confirmer un itinéraire de complément.

11. Système de génération d'itinéraire (10) selon l'une quelconque des revendications 1 à 4, dans lequel le dispositif de traitement (15) est configuré pour effectuer un processus consistant à générer l'itinéraire de déplacement automatisé lors de la génération d'un itinéraire permettant à la machine agricole (30) d'effectuer un déplacement automatisé en dehors d'un champ (70).

12. Procédé de génération d'itinéraire pour le déplacement automatisé d'une machine agricole (30), le procédé comprenant le fait de :
acquérir, à partir d'un véhicule (20) qui se déplace manuellement le long d'un itinéraire tout en enregistrant un trajet, des données représentant le trajet ;
détecter une action d'évitement effectuée par le véhicule (20) pour éviter un véhicule venant en sens inverse (90) sur la base d'au moins l'un des éléments suivants :
- une image vidéo prise par une caméra (120) montée sur le véhicule (20) pendant que le véhicule (20) se déplace,
- une évolution dans le temps d'une position du véhicule (20) indiquée par le trajet, ou
- un enregistrement d'une opération de braquage et/ou d'accélération et/ou de décélération du véhicule (20) ;
supprimer, du trajet, un segment associé à l'action d'évitement ; et
générer un itinéraire de déplacement automatisé de la machine agricole (30) sur la base du trajet dont le segment associé à l'action d'évitement a été supprimé.
